# EUROPÄISCHE PATENTSCHRIFT

(11) **EP 3 095 664 B1**
(45) Veröffentlichungstag und Bekanntmachung des Hinweises auf die Patenterteilung: **22.08.2018**
(21) Anmeldenummer: 16169310.6
(22) Anmeldetag: 12.05.2016
(51) Int. Cl.: B61D 47/00

(54) **SHUTTLEBALKEN ZUM TRANSPORT VON WAGGONAUFSÄTZEN, GÜTERUMSCHLAGVORRICHTUNG MIT DERARTIGEN SHUTTLEBALKEN UND GÜTERUMSCHLAGVERFAHREN**
SHUTTLE BEAMS FOR THE TRANSPORT OF WAGON ATTACHMENTS, GOODS HANDLING DEVICE WITH SUCH SHUTTLE BEAMS AND HANDLING METHOD
MACHOIRE DE NAVETTE DESTINEE AU TRANSPORT DE PIECES RAPPORTEES DE WAGON, DISPOSITIF DE TRANSBORDEMENT DE MARCHANDISES DOTE D'UNE TELLE MACHOIRE DE NAVETTE ET PROCEDE DE TRANSBORDEMENT

(30) Priorität: 13.05.2015 DE 102015006224
(43) Veröffentlichungstag der Anmeldung: 23.11.2016
(73) Patentinhaber: Cargobeamer AG, 04319 Leipzig (DE)
(72) Erfinder: Weidemann, Hans-Jürgen, 67346 Speyer (DE); Jenayeh, Imad, 52064 Aachen (DE); Rudat, Bernd, 08527 Plauen (DE)
(74) Vertreter: Patent- und Rechtsanwälte Dr. Solf & Zapf

(56) Entgegenhaltungen:
- EP-A1- 1 798 131
- WO-A1-2013/167315
- CN-A- 102 249 084
- DE-A1-102009 015 775
- DE-A1-102012 004 292
- DE-A1-102012 004 945

## Beschreibung

Die vorliegende Erfindung betrifft einen Shuttlebalken zum Transport von Waggonaufsätzen von Schienenwaggons quer zur Schiene in einer Güterumschlagvorrichtung für den kombinierten Güterverkehr. Die Erfindung betrifft außerdem eine Güterumschlagvorrichtung für den kombinierten Güterverkehr mit derartigen Shuttlebalken und ein Güterumschlagverfahren.

Aus der DE 10 2009 012 159 A1 ist eine Güterumschlagvorrichtung für den kombinierten Güterverkehr für eine Terminal- bzw. Bahnsteigabfertigung zum Umschlagen bzw. Versetzen von Gütern wie Containern, Sattelschlepperaufliegern, Lkw-Anhängern, Hängern von Gliederzügen, normalen intermodularen Ladeeinheiten (ISO, Typ C) oder dergleichen von der Straße zur Schiene und umgekehrt bekannt. Das Umschlagen bzw. Versetzen erfolgt dabei durch horizontale schienengleiche Querverladung von Wechseltragelementen bzw. Waggonaufsätzen mittels Quertransporteinrichtungen. Schienengleich meint, dass keine besondere Bahnsteighöhe erforderlich ist bzw. dass die Umschlagfläche des Terminals bzw. Bahnsteigs das gleiche oder nahezu das gleiche Arbeitsniveau hat wie die Schienenstränge der Gleisanlage oder die Achshöhe der Waggons.

Die Güterumschlagvorrichtung der DE 10 2009 012 159 A1 weist eine Gleisanlage mit zwei Gleissträngen, sowie eine neben der Gleisanlage und parallel zu dieser angeordnete etwa schienengleiche Verladebahn auf. Des Weiteren weist die Güterumschlageinrichtung mehrere Shuttlebalken für den Quertransport der Wechseltragelemente von einem Schienenwaggon auf die Verladebahn oder umgekehrt auf. Die Shuttlebalken weisen jeweils Hubeinrichtungen auf und sind auf unterflur in Querrillen der Verladebahn angeordneten Tragschienenelement in Querrichtung hin- und her verfahrbar. Bei den Hubeinrichtungen handelt es sich um Hubkolben oder nicht näher beschriebene Hebelanordnungen.

Auf den wannenförmigen Wechseltragelementen ist das Ladegut abgesetzt und gelagert. Die Wechseltragelemente sind dabei auf den beiden Seitenwänden des Schienenwagons gelagert. Zum Entladen der Schienenwaggons werden die Shuttlebalken unter den Schienenwaggon gefahren, das Wechseltragelement mittels der Hubeinrichtungen angehoben und die Waggonseitenwände nach außen zur Seite weg geklappt. Die Waggonseitenwände werden dabei in eine zwischen den Tragschienen vorhandene Lücke verschwenkt, so dass sie von den die Wechseltragelemente tragenden Shuttlebalken überfahren werden können. Die Wechseltragelemente werden dann durch Absenken auf der Verladebahn abgesenkt.

Eine weitere gattungsgemäße Güterumschlagvorrichtung mit Shuttlebalken geht aus der DE 10 2012 004 945 A1 hervor. Diese weist zum Ver- und Entriegeln sowie Auf- und Zuklappen der Seitenwände eine besondere Schwenk- und Entriegelungseinrichtung auf.

Des Weiteren gehen eine gattungsgemäße Güterumschlagvorrichtung und ein gattungsgemäßes Güterumschlagverfahren mit quer zu einer Gleisanlage verfahrbaren Shuttlebalken und gleisbettfesten, nicht verfahrbaren Hubvorrichtungen aus der DE 10 2012 004 292 A1 hervor. Die Shuttlebalken dienen zum Verfahren eines Waggonaufsatzes zu einer Verladebahn und umgekehrt. Sie verfahren hierzu unter die Schienenwaggons. Die gleisbettfesten Hubvorrichtungen weisen jeweils einen Scherenhubtisch auf und werden zum Abheben und Absenken der Waggonaufsätze von bzw. auf einem Waggonuntergestell und von bzw. auf den quer zu der Gleisanlage verfahrbaren Shuttlebalken verwendet.

Die EP 1 798 131 A1 offenbart eine verfahrbare Hubeinrichtung, welche zum Beispiel in einer Automobil-Fertigungsstraße verwendet wird. Die Hubeinrichtung weist einen Unterbau und einen Auflagetisch auf. Zwischen dem Unterbau und dem Auflagetisch ist ein Scherenhebelmechanismus vorhanden. Des Weiteren ist eine Nockenleiste vorhanden, welche ortsfest ist. Wenn der Unterbau die Nockenleiste überfährt, wirkt die Nockenleiste mit einem Schlepphebel des Scherenhebelmechanismus derart zusammen, dass der Auflagetisch angehoben wird. Die Nockenleiste ist nicht Teil der verfahrbaren Hubvorrichtung. Aus diesem Grund erfolgt das Anheben des Auflagetisches immer gleichzeitig mit einer Relativbewegung des Auflagetisches in Bezug zur Nockenleiste.

Die bekannten Güterumschlagvorrichtungen haben sich bewährt.

Aufgabe der vorliegenden Erfindung ist die Bereitstellung eines Shuttlebalkens zum Transport von Waggonaufsätzen von Güterwaggons quer zur Schiene in einer Güterumschlagvorrichtung für den kombinierten Güterverkehr, welche das Anheben und Absenken der Waggonaufsätze einfach, funktionssicher und mit wenig Kraftaufwand ermöglicht.

Weitere Aufgaben sind die Bereitstellung einer Güterumschlagvorrichtung mit derartigen Shuttlebalken und eines Güterumschlagverfahrens.

Diese Aufgaben werden durch einen Shuttlebalken mit Hubmitteln zum Anheben und Absenken eines Waggonaufsatzes von bzw. auf einer Verladebahn sowie gegebenenfalls von bzw. auf einem Waggonuntergestell eines Güterwaggons mit den Merkmalen von Anspruch 1, eine Güterumschlagvorrichtung mit den Merkmalen von Anspruch 17 sowie ein Güterumschlagverfahren mit den Merkmalen von Anspruch 21 gelöst. Vorteilhafte Weiterbildungen der Erfindung sind in den sich jeweils anschließenden Unteransprüchen gekennzeichnet.

Anhand der Zeichnung wird die Erfindung im Folgenden beispielhaft näher erläutert. Es zeigen:
- Figur 1:: Eine perspektivische, schematische Ansicht einer erfindungsgemäßen Güterumschlagvorrichtung mit einem Güterwaggon mit eingeklappten Waggonseitenwänden
- Figur 2:: Eine perspektivische, schematische Ansicht der erfindungsgemäßen Güterumschlagvorrichtung mit einem Güterwaggon mit ausgeklappten Waggonseitenwänden
- Figur 3:: Eine perspektivische, schematische Ansicht der erfindungsgemäßen Güterumschlagvorrichtung ohne Verladebahnen mit einem Güterwaggon mit eingeklappten Waggonseitenwänden
- Figur 4:: Eine perspektivische, schematische Ansicht der erfindungsgemäßen Güterumschlagvorrichtung ohne Verladebahnen mit einem Güterwaggon mit ausgeklappten Waggonseitenwänden
- Figur 5:: Eine perspektivische, schematische Ansicht der Güterumschlagvorrichtung gemäß Figur 4 mit unter den Güterwaggon fahrenden Shuttlebalken
- Figur 6:: Einen Längsschnitt des erfindungsgemäßen Shuttlebalkens auf einer Förderbahn
- Figur 7:: Ein vergrößerter Ausschnitt des Längsschnittes gemäß Figur 6
- Figur 8:: Eine Draufsicht auf den erfindungsgemäßen Shuttlebalken ohne obere Schenkelwandungen
- Figur 9:: Eine perspektivische Draufsicht auf den erfindungsgemäßen Shuttlebalken ohne eine der beiden Gehäuseseitenwandungen und mit größtenteils weggeschnittener Gehäusedeckenwandung

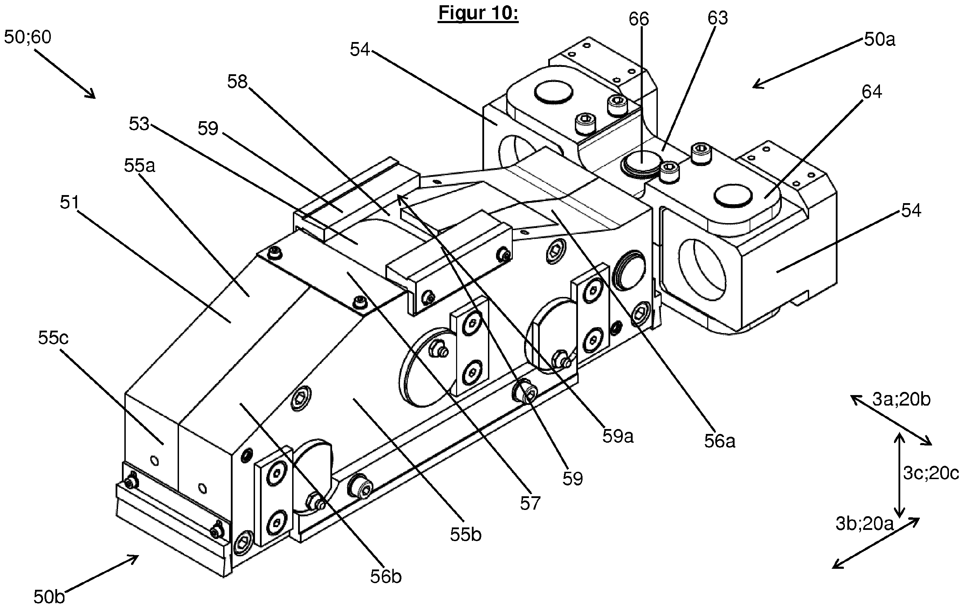

- Figur 10:: Eine perspektivische Draufsicht auf einen Hubwagen des erfindungsgemäßen Shuttlebalkens

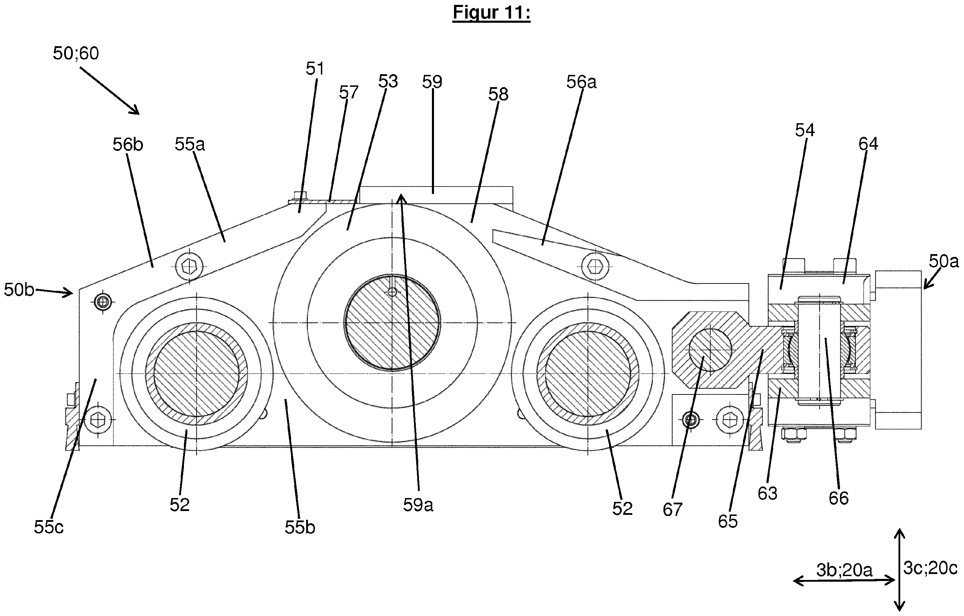

- Figur 11:: Einen Längsschnitt durch den Hubwagen gemäß Figur 10

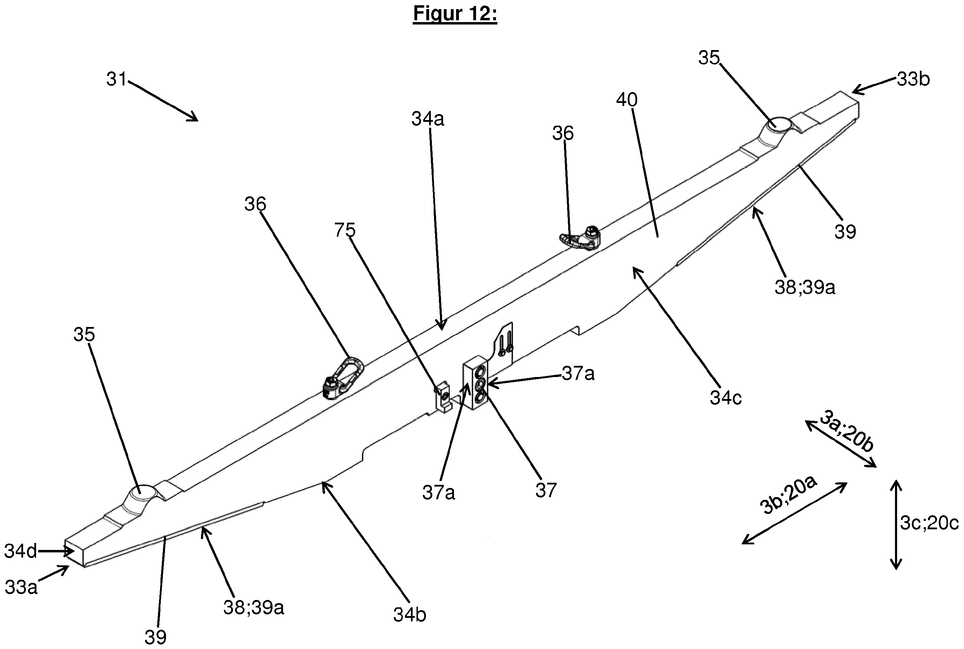

- Figur 12:: Eine perspektivische Ansicht eines Hubbalkens des erfindungsgemäßen Shuttlebalkens
- Figur 13:: Einen Querschnitt durch die Mitte des erfindungsgemäßen Shuttlebalkens

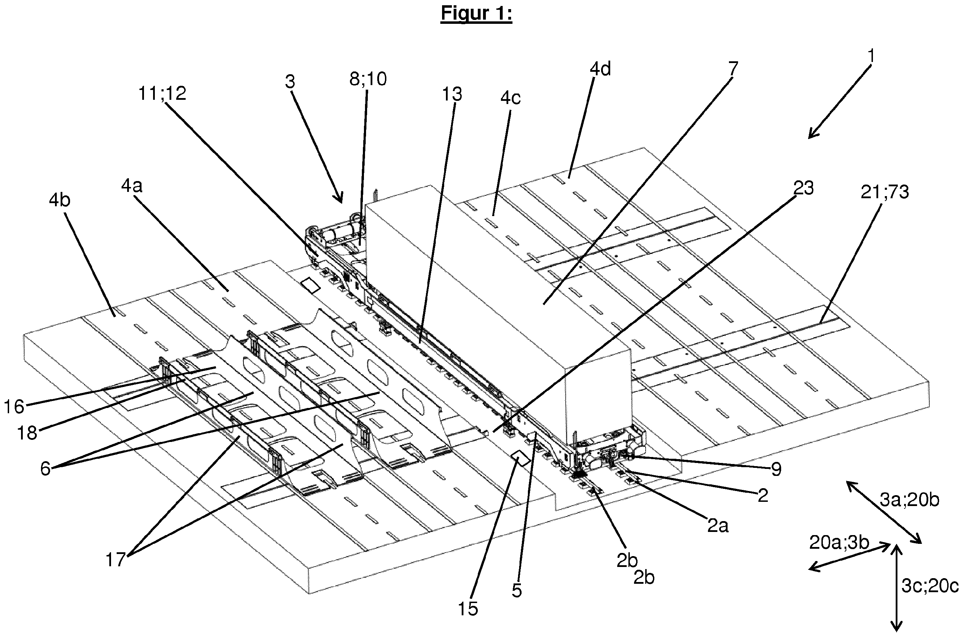

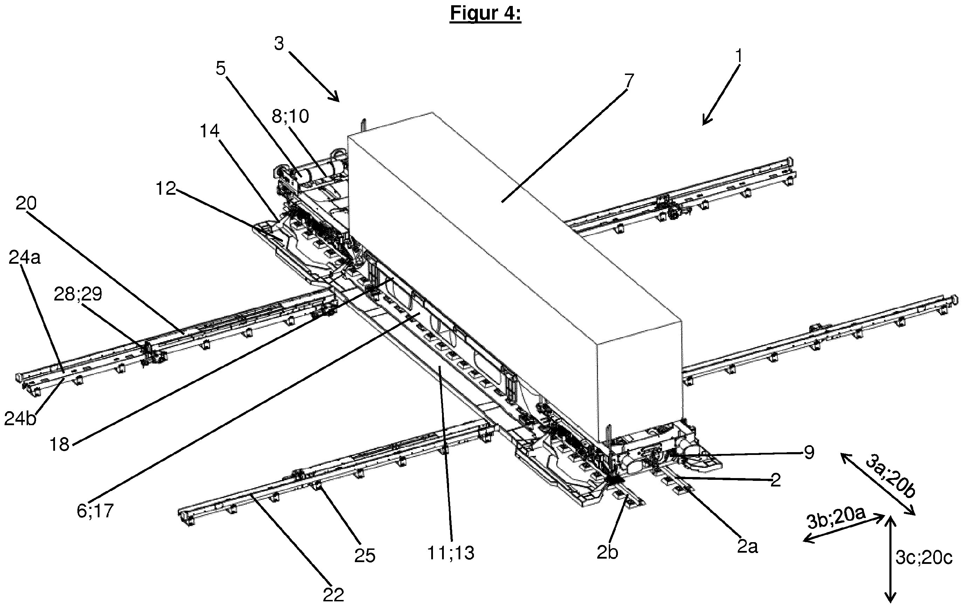

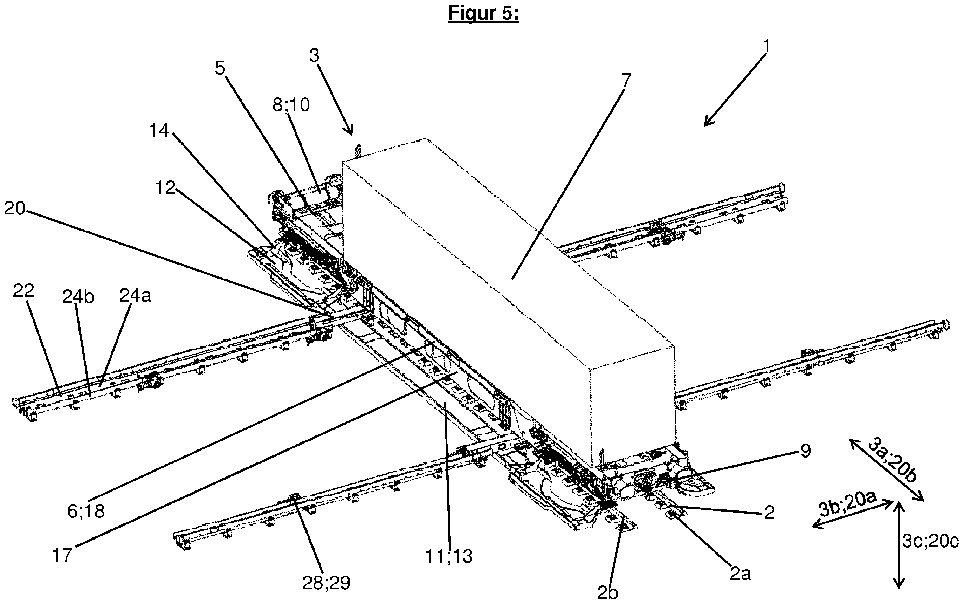

Die erfindungsgemäße Güterumschlagvorrichtung 1 (Fig. 1-5) dient zum Be- und Entladen von Güterzügen, insbesondere zum Umschlagen von Gütern von der Straße, von Fabriken oder Herstellwerken zur Schiene und umgekehrt, wobei das Umschlagen mittels schienengleicher Querverladung erfolgt. Die Güterumschlagvorrichtung 1 kann dabei in einem Werk oder einer Fabrik oder einem Logistik- oder Güterverteilzentrum oder dergleichen angeordnet sein. Die Güterumschlagvorrichtung 1 weist zumindest eine Eisenbahnschiene bzw. Gleisanlage 2 mit zwei zueinander parallelen Schienensträngen bzw. Gleissträngen 2a;2b auf, auf denen die Güterzüge mit Lok (nicht dargestellt) und daran hängenden Schienenwaggons bzw. Güterwaggons 3 verfahrbar gelagert sind. Beidseits neben und außerhalb der Gleisanlage 2 sind jeweils mehrere in etwa schienengleiche Verladebahnen 4a-d vorgesehen. Schienengleich meint, dass die Bahnoberfläche der Verladebahnen 4a-d der Höhe der Schienenoberkanten entspricht oder lediglich geringfügig, z.B. um 10 bis 50 cm höher ist. Im Gegensatz dazu wird beim Kranen die Ladung um ca. 5 m angehoben. Die Verladebahnen 4a-d sind jeweils in einer Richtung quer zu den Gleissträngen 2a;2b nebeneinander angeordnet. Vorzugsweise sind auf jeder Seite der Gleisanlage 2 bis 5 Verladebahnen 4a-d vorhanden.

Ein Güterwaggon 3 (Fig. 1-5) weist in an sich bekannter Weise jeweils ein Waggonuntergestell 5 und einen darauf aufgesetzten, insbesondere eingehängten, Waggonaufsatz 6 auf, der das zu transportierende Gut, z.B. einen Sattelschlepperauflieger 7 oder einen LKW-Anhänger oder einen Container, aufnimmt. Zudem weist der Güterwaggon 3 eine horizontale, sich parallel zu den Gleissträngen 2a;b erstreckende Waggonlängsrichtung 3a und eine dazu senkrechte, horizontale Waggonquerrichtung 3b, sowie eine vertikale Waggonhöhenrichtung 3c auf. Das Waggonuntergestell 5 weist in an sich bekannter Weise einen Waggonrahmen 8 sowie zwei, insbesondere zweiachsige, in Waggonlängsrichtung 3a voneinander beabstandete Drehgestelle 9 zum Verfahren des Güterwaggons 3 auf der Gleisanlage 2 auf. Anstelle der Drehgestelle 9 können auch Einzelachsen (nicht dargestellt) vorhanden sein.

Der Waggonrahmen 8 weist zwei voneinander in Waggonlängsrichtung 3a beabstandete Vorbauten bzw. Waggonkopfstücke 10 auf, die jeweils stirnseitig bzw. endseitig, des Waggonuntergestells 5 angeordnet sind. Die beiden Waggonkopfstücke 10 lagern jeweils in an sich bekannter Weise auf einem der beiden Drehgestelle 9. Dabei sind die beiden Waggonkopfstücke 10 jeweils fest mit dem jeweiligen Drehgestell 9 verbunden.

Des Weiteren befindet sich zudem oberseitig und zentral auf beiden Waggonkopfstücken 10 eine an sich bekannte Königszapfenarretierungseinrichtung zur Aufnahme und Verriegelung bzw. Arretierung eines Königszapfens des Sattelschlepperaufliegers 7 in horizontaler und/oder vertikaler Richtung relativ zum Waggonuntergestell 5. Die Königszapfenarretierungseinrichtung ist vorzugsweise gemäß der DE 10 2009 015 775 A1 ausgebildet.

Der Waggonrahmen 8 weist zudem zwei abklappbare Waggonseitenwände 11 auf. Diese verbinden die beiden Waggonkopfstücke 10 starr miteinander, also zueinander unverschieblich und unverdrehbar. Dabei sind die Waggonseitenwände 11 jeweils um eine zur Waggonlängsrichtung 3a parallele Seitenwandschwenkachse an den Waggonkopfstücken 10 gelagert.

Die beiden Waggonseitenwände 11 weisen jeweils eine Wandoberkante auf. Außerdem weisen die beiden Waggonseitenwände 11 eines Güterwaggons 3 jeweils zwei endseitige Auflagerstege 12 und einen dazwischen angeordneten, mittigen Lastaufnahmesteg 13 auf. Die beiden Auflagestege 12 und der Lastaufnahmesteg 13 sind miteinander fest verbunden, insbesondere einstückig ausgebildet. Der Lastaufnahmesteg 13 dient zur Aufnahme bzw. Lagerung des Waggonaufsatzes 6. Die beiden Auflagerstege 12 dienen zur schwenkbaren Lagerung der Waggonseitenwände 11 an den Waggonkopfstücken 10 um die jeweilige Seitenwandschwenkachse. Dazu weisen die Waggonseitenwände 11 in an sich bekannter Weise, insbesondere jeweils vier, Lagerarme 14 auf, die jeweils einendig mit den Auflagerstegen 12 fest, also unverschieblich und unverdrehbar, verbunden, insbesondere mit diesen verschweißt, sind und andernendig ein Schwenklager aufweisen.

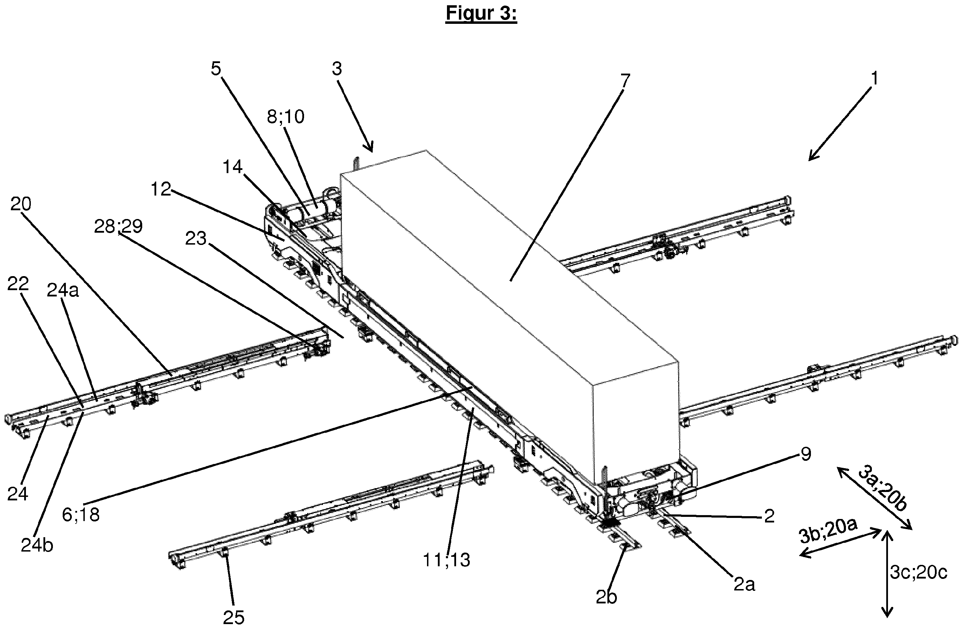

Jeder Güterwaggon 3 weist zudem zumindest vier erste Verriegelungseinrichtungen (nicht dargestellt) zur Verriegelung bzw. Arretierung der Waggonseitenwände 11 in ihrer eingeklappten Stellung (Fig. 1,3) auf. Insbesondere sind für jede Waggonseitenwand 11 jeweils zumindest zwei erste Verriegelungseinrichtungen vorhanden, wobei jeweils eine erste Verriegelungseinrichtung pro Auflagersteg 12 vorhanden ist. Die Verriegelungseinrichtungen sind also jeweils im Bereich der Auflagerstege 12 angeordnet und verriegeln diese mit den Waggonkopfstücken 10. Zudem sind die Verriegelungseinrichtungen vorzugsweise gemäß der DE 10 2012 004 945 A1 ausgebildet.

Demgemäß weist eine erste Verriegelungseinrichtung zwei in Waggonlängsrichtung 3a hin- und her verfahrbare Verriegelungsbolzen auf. Die Verriegelungsbolzen sind die jeweils in Waggonlängsrichtung 3a hin- und her verschieblich an dem Waggonkopfstück 10 gelagert. Zudem weisen die Verriegelungseinrichtungen jeweils zwei seitenwandfeste Verriegelungsgehäuse mit einer Verriegelungsaussparung auf. Die Verriegelungsbolzen können in die Verriegelungsaussparung einfahren und aus dieser heraus fahren. In der eingefahrenen Stellung ist die Waggonseitenwand 11 mit dem Waggonkopfstück 10 verriegelt. Für jeden Verrieglungsbolzen weist eine erste Verriegelungseinrichtung zudem jeweils einen, bevorzugt identischen, Hebelmechanismus zur Betätigung, also zum Ein-und Ausfahren, des Verriegelungsbolzens auf.

Vorzugsweise weist jeder Güterwaggon 3 zudem eine zweite Verriegelungseinrichtung gemäß der DE 10 2012 004 945 A1 auf, die durch Aufsetzen des Waggonaufsatzes 6 aktivierbar ist.

Zur Betätigung der ersten Verriegelungseinrichtungen weist die Güterumschlagvorrichtung 1 jeweils eine Schwenk- und Entriegelungseinrichtung 15 (in Fig. 1 schematisch dargestellt) auf. Diese sind ebenfalls aus der DE 10 2012 004 945 A1 bekannt. Die Schwenk- und Entriegelungseinrichtungen 15 dienen zum Lösen der Verriegelung der Waggonseitenwände 11 durch die Verriegelungsbolzen sowie zum kontrollierten, geführten Auf- und Einklappen der Waggonseitenwände 11. Dabei ist für jede erste Verriegelungseinrichtung eine Schwenk- und Entriegelungseinrichtung 15 vorhanden. Eine Schwenk- und Entriegelungseinrichtung 15 weist jeweils zwei Betätigungshebel auf, welche die beiden Hebelmechanismen der ersten Verriegelungseinrichtung derart betätigen, dass die beiden Verriegelungsbolzen in ihre ausgefahrene Stellung verfahren werden. Zudem weist eine Schwenk- und Entriegelungseinrichtung 15 jeweils einen um eine zur Waggonlängsrichtung 3a parallele Schwenkachse verschwenkbaren Schwenkhebel auf, der die Waggonseitenwand 11 aufnimmt. Durch Verschwenken des Schwenkhebels kann die Waggonseitenwand 11 aus- und eingeklappt werden.

Die an sich bekannten Waggonaufsätze 6 (Fig. 1-5) weisen jeweils eine Wannenform bzw. einen U-förmigen Querschnitt auf. Insbesondere weisen die Waggonaufsätze 6 jeweils eine Aufsatzbodenwandung 16 und zwei Aufsatzseitenwandungen 17 auf. Vorne und hinten bzw. stirnseitig weisen die Waggonaufsätze 6 keine Wandungen auf, so dass sie von einem LKW oder dergleichen befahren werden können. Die Aufsatzseitenwandungen 17 weisen an ihrem oberen Ende nach außen abstehende Einhängeleisten 18 auf, mittels denen die Waggonaufsätze 6 jeweils in die Waggonseitenwände 11 eingehängt werden.

Die Güterumschlagvorrichtung 1 weist außerdem mehrere ortsfeste Hubeinrichtungen zum Anheben jeweils eines Waggonaufsatzes 6 von dem Waggonuntergestell 5 bzw. von erfindungsgemäßen Shuttlebalken 20 und Absetzen auf dem Waggonuntergestell 5 bzw. auf den Shuttlebalken 20 auf. Die Hubeinrichtungen sind vorzugsweise jeweils beidseits, jeweils verladebahnseitig, direkt neben Gleissträngen 2a;2b angeordnet. Die Hubeinrichtungen sind somit nicht zwischen den beiden Gleissträngen 2a;2b, sondern außerhalb dieser angeordnet, aber vorzugsweise im Gleisbett. Bei den Hubeinrichtungen handelt es sich vorzugsweise um mechanische Hubgetriebe, welche durch Kombination von Elektromotoren, Spindeln und Spindelmuttern angetrieben werden, alternativ um hydraulisch angetriebene Hubeinrichtungen.

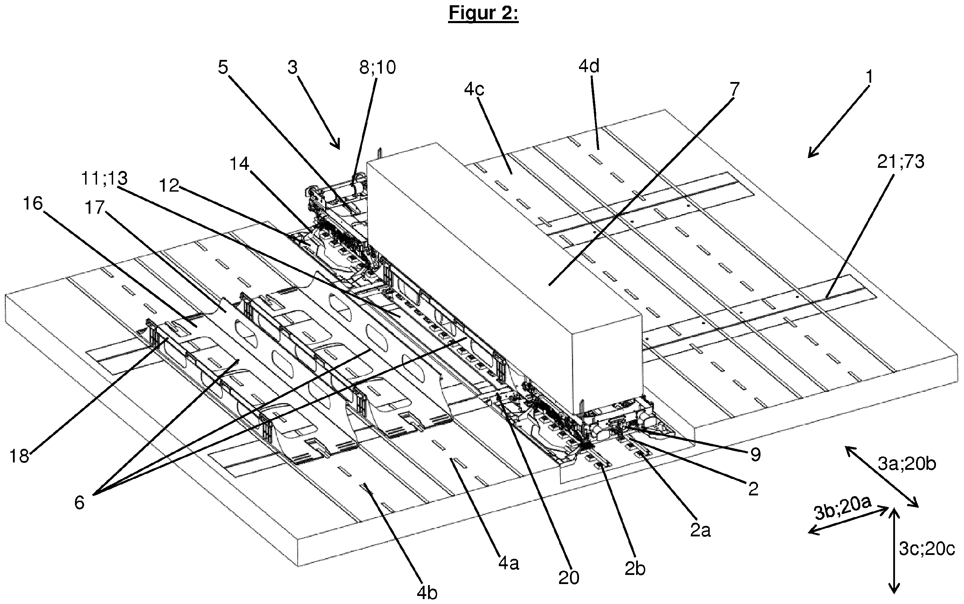

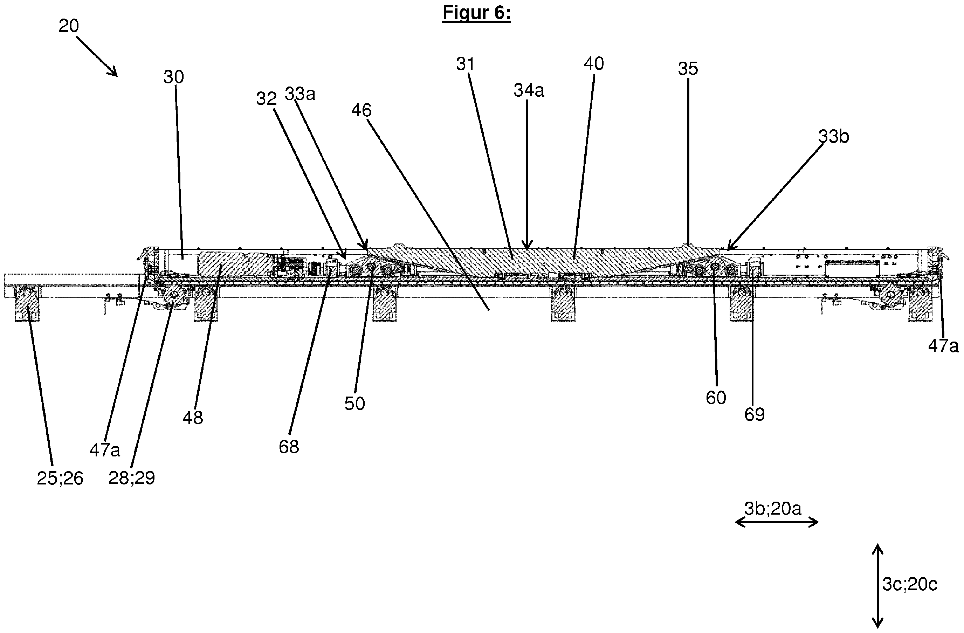

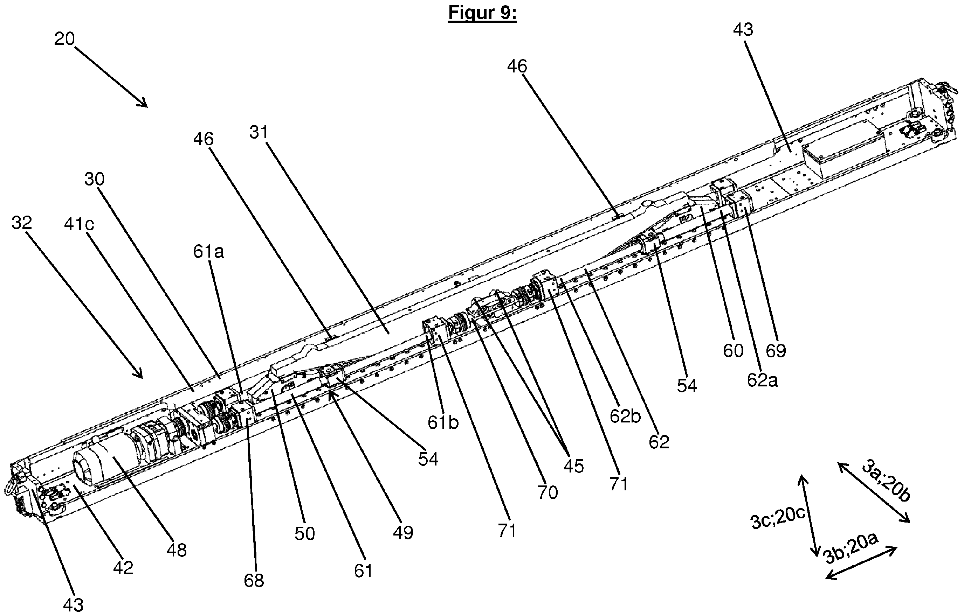

Die erfindungsgemäße Güterumschlagvorrichtung 1 weist zudem mehrere erfindungsgemäße Shuttlebalken 20 (Fig. 2-9), auf, die jeweils quer, also senkrecht, zu den Gleissträngen 2a;2b unterflur in Querrillen 21 der Verladebahnen 4 hin- und her verfahrbar sind.

Dazu sind in den Querrillen 21 Förderbahnen 22 vorhanden, auf denen die Shuttlebalken 20 quer zu den Gleissträngen 2a;2b verfahrbar sind. Bevorzugt sind für jeden Güterwaggon 3 jeweils zwei Shuttlebalken 20 und vier Förderbahnen 22, nämlich je zwei auf jeder Seite der Gleisanlage 2, vorhanden. Die Förderbahnen 22 enden jeweils vor den Gleissträngen 2a;2b. Zwischen den beiden Gleissträngen 2a;2b sind aber in an sich bekannter Weise Förderbahnenstücke vorhanden, die in Fortsetzung der Förderbahnen 22 angeordnet sind, so dass die Shuttlebalken 20 von den Förderbahnen 22 auf die Förderbahnenstücke verfahren können und umgekehrt. Dadurch können die Shuttlebalken 20 in an sich bekannter Weise unter einen Güterwaggon 3 fahren, worauf weiter unten näher eingegangen wird. Vor den Gleissträngen 2a;2b weisen die Förderbahnen 22 jeweils in ebenfalls an sich bekannter Weise eine Lücke 23 auf, in die die abgeklappte Waggonseitenwände 11 des Waggonuntergestells 5 der Güterwaggons 3 zu liegen kommen, worauf ebenfalls weiter unten näher eingegangen wird.

Die Förderbahnen 22 weisen jeweils eine Führungsschiene 24 und mehrere Lagerblöcke 25 auf. Die Führungsschienen 24 weisen jeweils eine horizontale Schienenbodenwandung 24a und zwei seitliche, vertikale Schienenwandungen 24b auf. Die Lagerblöcke 25 einer Förderbahn 22 sind in Querrichtung hintereinander angeordnet. Zudem weisen die Lagerblöcke 25 jeweils ein Lagergestell 26 sowie zwei Transportrollen 27 auf. Die Transportrollen 27 sind um eine horizontale, zu den Gleissträngen 2a;2b parallele Drehachse frei drehbar auf dem Lagergestell 26 gelagert. Die Führungsschienen 24 sind ebenfalls auf den Lagergestellen 26 gelagert. Die Transportrollen 27 sind also ortsfest. Dabei sind die Führungsschienen 24 oberhalb der Transportrollen 27 angeordnet, wobei die Schienenbodenwandung 24a jeweils Aussparungen aufweist, durch welche die Transportrollen 27 etwas nach oben heraus ragen.

Des Weiteren weisen die Förderbahnen 22 Antriebsmittel 28 auf, mittels denen die Shuttlebalken 20 jeweils quer zu den Gleissträngen 2a;2b hin- und her antreibbar hin Verbindung stehen. Die Antriebsmittel 28 weisen vorzugsweise angetriebene Zahnräder 29 auf, welche unterhalb der Führungsschienen 24 angeordnet sind und ebenfalls Aussparungen in der Schienenbodenwandung 24a durchgreifen. Die Zahnräder 29 werden vorzugweise angetrieben mit einzelnen Elektromotoren, die bevorzugt elektronisch miteinander synchronisiert werden. Die Synchronisation erfolgt z.B. über eine zentrale Steuereinrichtung, welche die einzelnen Elektromotoren in Drehzahl und Drehwinkel sehr genau synchronisiert. Alternativ dazu ist lediglich ein einziger Elektromotor vorhanden und die einzelnen Zahnräder 29 sind miteinander mechanisch, z.B. über Gelenkwellen, gekoppelt.

Die langgestreckt ausgebildeten Shuttlebalken 20 weisen jeweils einen Balkengrundrahmen 30 bzw. -grundgestell 30, einen Hubbalken 31 sowie eine Hubbalkenantriebseinrichtung 32 zum Anheben und Absenken des Hubbalkens 31 relativ zum Balkengrundrahmen 30 auf. Zudem weisen die Shuttlebalken jeweils eine horizontale Balkenlängsrichtung 20a, eine dazu senkrechte, horizontale Balkenquerrichtung 20b und eine vertikale Balkenhöhenrichtung 20c auf.

Jeder Hubbalken 31 weist eine Längserstreckung in Balkenlängsrichtung 20a auf. Zudem weist der Hubbalken 31 in Balkenlängsrichtung 20a gesehen ein erstes und ein zweites Hubbalkenende 33a;33b auf. Der Hubbalken 31 weist außerdem eine Hubbalkenoberseite 34a, eine dazu vertikal gegenüberliegende Hubbalkenunterseite 34b, zwei sich in Balkenquerrichtung 20b gegenüberliegende Hubbalkenseitenflächen 34c, sowie vorzugsweise zwei sich in Balkenlängsrichtung 20a gegenüberliegende, vorzugsweise vertikale, Hubbalkenstirnflächen 34d auf.

Die Hubbalkenoberseite 34a ist vorzugsweise ebenflächig und horizontal ausgebildet. Des Weiteren weist der Hubbalken 31 zwei von der Hubbalkenoberseite 34a nach oben abstehende Zentrierzapfen 35 auf. Die Zentrierzapfen dienen zur Aufnahme und Zentrierung eines Waggonaufsatzes 6 auf dem Shuttlebalken 20, worauf weiter unten näher eingegangen wird. Die Zentrierzapfen 35 weisen jeweils eine sich nach oben verjüngende Form auf. Zudem sind die Zentrierzapfen 35 jeweils im Bereich der Hubbalkenenden 33a;33b angeordnet. Vorzugsweise weist der Hubbalken 31 zudem zwei von der Hubbalkenoberseite 34a nach oben abstehende Greiflaschen 36 zum Handling der Hubbalken 31 auf. Die beiden Greiflaschen 36 sind zwischen den beiden Zentrierzapfen 35 angeordnet und an die Hubbalkenoberseite 34a anklappbar.

Die Hubbalkenseitenflächen 34c sind vorzugsweise ebenflächig ausgebildet und zueinander parallel. Zudem sind sie senkrecht zur Balkenquerrichtung 20b. Der Hubbalken 31 weist zwei, insbesondere quaderförmige, Führungsklötze 37 auf. Jeweils ein Führungsklotz 37 schließt sich an eine der beiden Hubbalkenseitenflächen 34c an und steht von dieser ab. Die beiden Führungsklötze 37 liegen sich vorzugsweise in Balkenquerrichtung 20b gegenüber bzw. sind zueinander fluchtend. Zudem sind die Führungsklötze 37 mittig zwischen den beiden Hubbalkenenden 33a;33b angeordnet. Die Führungsklötze 37 weisen jeweils zwei sich in Balkenlängsrichtung 20a gegenüberliegende und zu dieser senkrechte, ebenflächige Klotzführungsflächen 37a auf. Die Klotzführungsflächen 37a dienen zur Führung des Hubbalkens 31 in Balkenhöhenrichtung 20c bzw. dazu, dass der Hubbalken 31 in Balkenlängsrichtung 20a unverschieblich mit dem Balkengrundrahmen 30 in Verbindung steht. Des Weiteren weist der Hubbalken 31 vorzugsweise eine Aushebesicherung 75 auf, welche beispielsweise verhindert, dass sich der Hubbalken 31 z.B. aufgrund einseitiger Belastung aufstellt. Dazu wirkt die Aushebesicherung mit einem entsprechenden Widerlager des Balkengrundrahmens 30 zusammen.

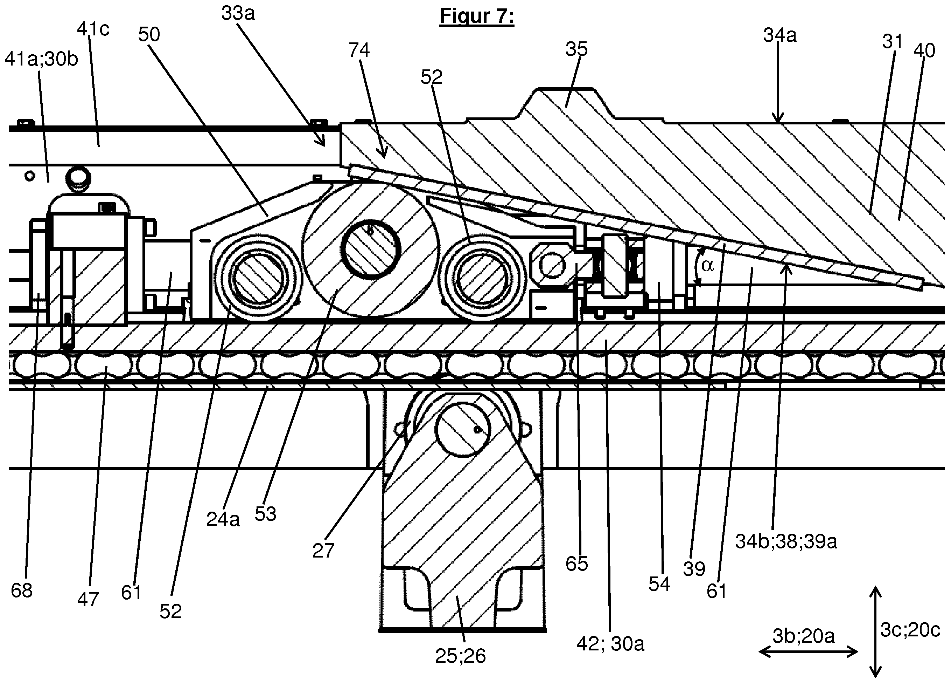

Die Hubbalkenunterseite 34b weist erfindungsgemäß zwei jeweils ebenflächige Hubbalkenantriebsflächen 38 auf, welche sich jeweils von einem der beiden Balkenenden 33a;33b in Balkenlängsrichtung 20a gesehen schräg nach unten weg erstrecken. Die Hubbalkenantriebsflächen 38 dienen zum Antrieb des Hubbalkens 31 in vertikaler Richtung. Die Hubbalkenantriebsflächen 38 schließen mit der Balkenlängsrichtung 20a jeweils einen spitzen Keilwinkel α (Fig. 7) von vorzugsweise 10 bis 30 ° ein.

Vorzugsweise weist der Hubbalken 31 zwei Bleche 39 aus gehärtetem Metall, vorzugsweise aus gehärtetem Stahl, auf, wobei Blechoberflächen 39a der Bleche 39 die Hubbalkenantriebsflächen 38 ausbilden. Die Bleche 39 sind mit einem Hubbalkengrundkörper 40 des Hubbalkens 31 fest verbunden, insbesondere verschweißt. Der einstückige Hubbalkengrundkörper 40 ist massiv ausgebildet und besteht aus Metall, vorzugsweise aus Stahl. Der einstückige Hubbalkengrundkörper 40 weist die beiden Zentrierzapfen 35 auf. Die beiden Greiflaschen 36 sowie die beiden Führungsklötze 37 sind vorzugsweise als separate Bauteile ausgebildet und mit dem Hubbalkengrundkörper 40 fest verbunden, z.B. verschraubt. Der Hubbalkengrundkörper 40 weist zudem die beiden Hubbalkenseitenflächen 34c und die Hubbalkenoberseite 34a sowie einen Teil der Hubbalkenunterseite 34b auf.

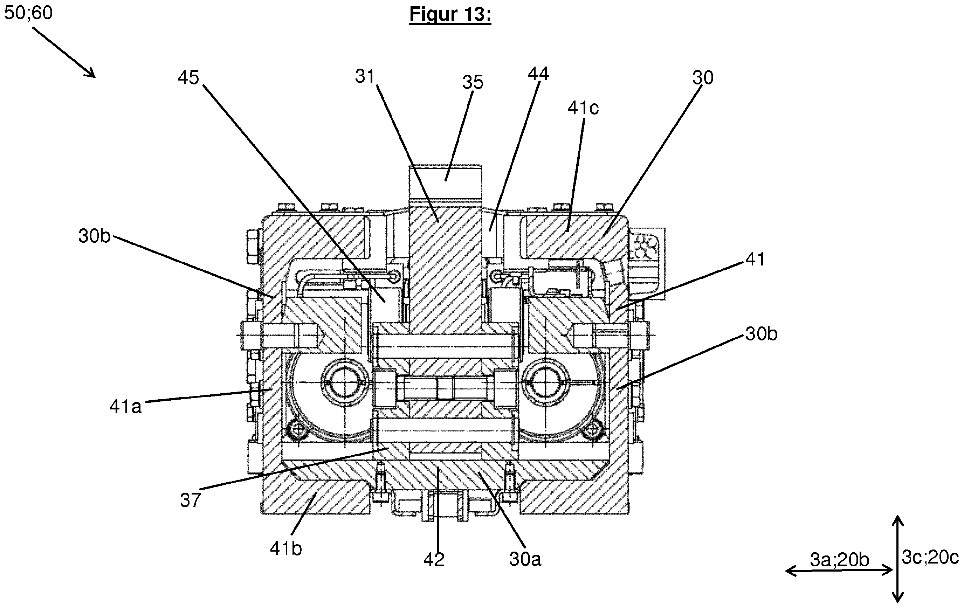

Der, vorzugsweise quaderförmige, Balkengrundrahmen 30 weist ebenfalls eine Längserstreckung in Balkenlängsrichtung 20a auf. Er dient zur Aufnahme und Lagerung des Hubbalkens 31 sowie der Hubbalkenantriebseinrichtung 32. Der Balkengrundrahmen 30 weist vorzugsweise zwei U-Profilschienen 41, eine horizontale Bodenplatte 42 sowie bevorzugt zwei sich in Balkenquerrichtung 20b gegenüberliegende vertikale Stirnplatten 43 auf (Fig. 13). Die beiden U-Profilschienen 41 weisen jeweils eine mittlere, vertikale Stegwandung 41a und zwei davon abstehende, horizontale Schenkelwandungen 41b;c auf. Die beiden U-Profilschienen 41 liegen sich in Balkenquerrichtung 20b gegenüber. Sie sind jeweils derart angeordnet, dass ihre Schenkelwandungen 41b;c paarweise einander zugewandt sind und sich paarweise gegenüberliegen, aber voneinander beabstandet sind. Auf den beiden unteren Schenkelwandungen 41b liegt die Bodenplatte 42 auf. Die Bodenplatte 42 ist zudem mit den unteren Schenkelwandungen 41b fest verbunden, insbesondere verschraubt. Die beiden unteren Schenkelwandungen 41b und die Bodenplatte 42 bilden eine Grundrahmenbodenwandung 30a des Balkengrundrahmens 30. Die beiden Stegwandungen 41a bilden jeweils eine Grundrahmenseitenwandung 30b des Balkengrundrahmens 30. Zwischen den beiden oberen Schenkelwandungen 41c, welche den Balkengrundrahmen 30 nach oben abschließen, ist ein Längsschlitz 44 vorhanden, der zur Durchführung des Hubbalkens 31 dient.

Die U-Profilschienen 41, die Bodenplatte 42 und die beiden Stirnplatten 43 bestehen jeweils vorzugsweise aus Metall.

Des Weiteren weist der Balkengrundrahmen 30 zwei oder mehr Führungsblöcke 46 auf, die zur Festlegung des Hubbalkens 31 in Balkenquerrichtung 20b dienen. Dazu ist jeweils ein Führungsblock 46 innenseitig an einer der beiden Stegwandungen 41a angeordnet und mit dieser fest verbunden. Die Führungsblöcke 46 stehen von einer Innenfläche der Stegwandung 41a ab. Sie weisen jeweils eine ebene Blockführungsfläche auf, wobei die Blockführungsflächen parallel zu den Hubbalkenseitenflächen 34c sind und an diesen gleitbar anliegen.

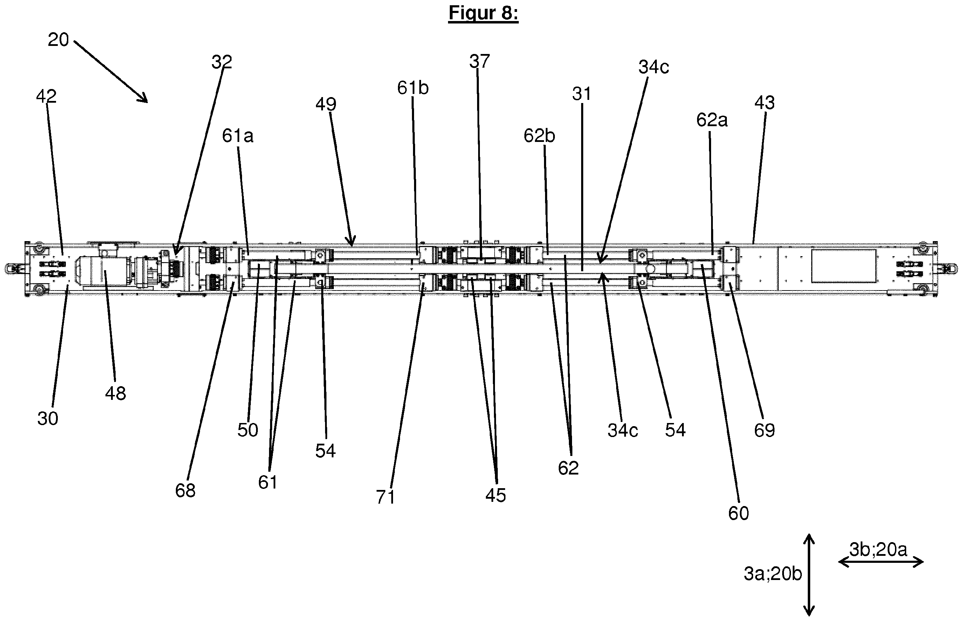

Der Balkengrundrahmen 30 weist zudem vier Führungsrollen 45 (Fig. 8) auf, welche zur Führung des Hubbalkens 31 dienen. Die Führungsrollen 45 sind jeweils um eine zur Balkenquerrichtung 20b parallele Drehachse fest mit dem Balkengrundrahmen 30, insbesondere einer der beiden Rahmenseitenwandungen 30b, verbunden. Die Führungsrollen 45 sind dabei paarweise angeordnet. Ein Führungsrollenpaar ist innenseitig an der einen Rahmenseitenwandungen 30b befestigt und das andere Führungsrollenpaar ist an der anderen Rahmenseitenwandungen 30b befestigt. Die beiden Führungsrollenpaare sind in Balkenquerrichtung 20b vorzugsweise einander gegenüberliegend angeordnet. Zudem sind die beiden Führungsrollen 45 eines Führungsrollenpaares in Balkenlängsrichtung 20a zueinander benachbart bzw. fluchtend und zueinander beabstandet angeordnet.

Zudem weist der Balkengrundrahmen 30 eine Antriebskette 47 auf, welche zum Antrieb des Shuttlebalkens 20 parallel zur Balkenlängsrichtung 20a dient. Dazu wirkt die Antriebskette 47 mit den Zahnrädern 29 zusammen bzw. steht mit diesen in Eingriff. Die Antriebskette 47 erstreckt sich in Balkenlängsrichtung 20a und weist zwei Kettenenden 47a auf. Sie ist außenseitig an der Rahmenbodenwandung 30a, insbesondere unterseitig der Bodenplatte 42, angeordnet bzw. läuft an dieser entlang, vorzugsweise zwischen den beiden unteren Schenkelwandungen 41b. Die beiden Kettenenden 47 sind an den beiden Gehäusestirnplatten 43 außenseitig befestigt. Die Antriebskette 47 ist somit fest, also unverschieblich und unverdrehbar, mit dem Balkengrundrahmen 30 verbunden.

Die Hubbalkenantriebseinrichtung 32 weist einen Antriebsmotor 48, ein Spindelgetriebe 49, sowie zwei Antriebs- bzw. Hubwagen 50;60 auf. Bei dem Antriebsmotor 48 handelt es sich vorzugsweise um einen Elektromotor, insbesondere ausgeführt als Gleichstrom-Motor oder als Wechselstrom-Motor jeweils in Synchron- oder Asynchronbauweise. Der Elektromotor wird vorzugsweise mit elektronischer Steuerung ausgeführt. Alternativ sind auch andere, z.B. hydraulische Antriebsmotoren möglich.

Die beiden Hubwagen 50;60 weisen jeweils ein Wagengehäuse 51, vier Fahrrollen 52, eine Antriebs- bzw. Hubrolle 53 sowie zwei Mutterngehäuse 54 auf. Zudem weisen die Hubwagen 50;60 jeweils in Balkenlängsrichtung 20a gesehen jeweils ein erstes und ein zweites Wagenende 50a;50b;60a;60b auf. Die beiden Hubwagen 50;60 sind in Balkenlängsrichtung 20a gesehen zueinander gegenüberliegend angeordnet. Dabei sind die ersten Wagenenden 50a;60a einander zugewandt, die zweiten Wagenenden 50b;60b einander abgewandt.

Das Wagengehäuse 51 weist jeweils eine Wagendeckenwandung 55a, zwei Wagenseitenwandungen 55b sowie zwei Wagenstirnwandungen 55c auf. Die beiden Wagenseitenwandungen 55b liegen sich in Balkenquerrichtung 20b gegenüber. Die beiden Wagenstirnwandungen 55c liegen sich in Balkenlängsrichtung 20a gegenüber. Die Wagendeckenwandung 55a ist vorzugsweise giebeldachförmig ausgebildet und weist zwei schräge Dachabschnitte 56a;b sowie einen geraden Dachabschnitt 57 auf. Die schrägen Dachabschnitte 56a;b erstrecken sich jeweils von dem jeweiligen Wagenende 50a;b;60a;b schräg nach oben aufeinander zu. Zwischen dem ersten schrägen Dachabschnitt 56a und dem geraden Dachabschnitt 57 ist zudem eine durchgehende Deckenaussparung 58 vorhanden, durch die Hubrolle 53 nach oben aus dem Wagengehäuse 51 heraus ragt. Beidseits der Deckenaussparung 58 sind zudem zwei Führungsleisten 59 vorhanden, welche Leisteninnenflächen 59a zur Führung des Hubbalkens 31 aufweisen.

Die Fahrrollen 52 sind jeweils paarweise um dieselbe Drehachse drehbar in dem Wagengehäuse 51 gelagert. Die Drehachsen der Fahrrollen 52 sind dabei parallel zur Balkenquerrichtung 20b. Die beiden Fahrrollenpaare sind in Balkenlängsrichtung 20a hintereinander angeordnet. Die Fahrrollen 52 dienen zum Verfahren des Hubwagens 50;60 innerhalb des Balkengrundrahmens 30, insbesondere auf der Rahmenbodenwandung 30a, hin- und her parallel zur Balkenlängsrichtung 20a. Der Hubwagen 50;60 ist somit mittels der Fahrrollen 52 auf der Rahmenbodenwandung 30a parallel zur Balkenlängsrichtung 20a hin- und her verfahrbar rollengelagert. Dazu ragen die Fahrrollen 52 aus dem nach unten offenen Wagengehäuse 51 nach unten heraus.

Die Hubrolle 53 ist ebenfalls um eine zur Balkenquerrichtung 20b parallele Drehachse drehbar in dem Wagengehäuse 51 gelagert. Dabei ist die Hubrolle 53 zwischen den beiden Fahrrollenpaaren angeordnet. Zudem ist die Hubrolle 53 in vertikaler Richtung höher als die Fahrrollen 52 angeordnet, so dass die Hubrolle 53 von der Rahmenbodenwandung 30a beabstandet ist und nicht auf dieser abrollt. Die Hubrolle 53 ragt außerdem durch die Deckenaussparung 58 nach oben aus dem Wagengehäuse 51 heraus.

Die beiden Mutterngehäuse 54 weisen jeweils ein Innengewinde zur Aufnahme einer Spindel 61;62 des Spindelgetriebes 49 auf. Sie sind am ersten Wagenende 50a;60a benachbart zur Wagenstirnwandung 55c angeordnet. Zudem sind die beiden Mutterngehäuse 54 mittels eines zwischen den beiden Mutterngehäusen 54 angeordneten Verbindungssteges 63 fest miteinander verbunden. Der Verbindungssteg 63 und die beiden Mutterngehäuse 54 bilden zusammen eine Wippe 64, welche mit dem Wagengehäuse 51 sowohl um eine zur Balkenquerrichtung 20b parallele Drehachse als auch um eine zur Balkenhöhenrichtung 20c parallele Drehachse drehbar verbunden ist. Dazu ist ein Kupplungsteil 65 vorhanden. Das Kupplungsteil 65 ist einendig mittels eines ersten Lagerbolzens 66 um die zur Balkenhöhenrichtung 20c parallele Drehachse drehbar mit dem Verbindungssteg 63 verbunden. Andernendig ist das Kupplungsteil 65 mittels eines zweiten Lagerbolzens 67 um die zur Balkenquerrichtung 20b parallele Drehachse drehbar mit dem Wagengehäuse 51 verbunden.

Das Spindelgetriebe 49 weist zwei erste Spindeln 61 sowie zwei zweite Spindeln 62 auf. Die Spindeln 61;62 erstrecken sich jeweils parallel zur Balkenlängsrichtung 20a. Die beiden ersten Spindeln 61 dienen zum Antrieb des ersten Hubwagens 50 und die beiden zweiten Spindeln 62 dienen zum Antrieb des zweiten Hubwagens 60.

Die beiden ersten Spindeln 61 sind in Balkenquerrichtung 20b zueinander benachbart angeordnet. Zudem sind sie beidseits des Hubbalkens 31 und beidseits des Wagengehäuses 51 des ersten Hubwagens 50 angeordnet. Die beiden ersten Spindeln 61 stehen zudem an ihrem ersten Spindelende 61a mit dem Antriebsmotor 48 um ihre Spindelachse drehbar antreibbar in Verbindung. Zwischen den beiden ersten Spindeln 61 und einer Abtriebswelle des Antriebsmotors 48 ist dabei z.B. eine Ritzelanordnung vorhanden. Zudem sind die ersten Spindeln 61 an ihrem ersten Spindelende 61a um die Spindelachse drehbar in einem Lagergehäuse 68 gelagert, welches fest mit dem Balkengrundrahmen 30, insbesondere der Rahmenbodenwandung 30a, verbunden ist. Die ersten Spindeln 61 sind zudem durch die Mutterngehäuse 54 des ersten Hubwagens 50 durchgeführt und stehen mit deren Innengewinde in Eingriff. Dadurch steht der erste Hubwagen 50 über die ersten Spindeln 61 mit dem Antriebsmotor 48 parallel zur Balkenlängsrichtung 20a linear hin- und her antreibbar in Verbindung. Die ersten Spindeln 61 sind beidseits neben den Wagenseitenwandungen 55b angeordnet.

Die beiden zweiten Spindeln 62 sind analog zu den ersten Spindeln 61 in Balkenquerrichtung 20b zueinander benachbart und beidseits des Hubbalkens 31 sowie beidseits des Wagengehäuses 51 des zweiten Hubwagens 60 angeordnet. Die zweiten Spindeln 62 sind an ihrem ersten Spindelende 62a um die Spindelachse drehbar in einem Lagergehäuse 69 gelagert, welches fest mit dem Balkengrundrahmen 30, insbesondere der Rahmenbodenwandung 30a, verbunden ist. Die zweiten Spindeln 61 sind zudem durch die Mutterngehäuse 54 des zweiten Hubwagens 60 durchgeführt und stehen mit deren Innengewinde in Eingriff. Dabei sind sie beidseits neben den Wagenseitenwandungen 55b angeordnet.

Die ersten und zweiten Spindeln 61;62 sind dabei paarweise an ihrem zweiten Spindelende 61b;62b jeweils um ihre Spindelachsen nicht verdrehbar bzw. drehfest miteinander verbunden bzw. gekoppelt. Die Spindelachsen der ersten Spindel 61 und der mit dieser gekoppelten zweiten Spindel 62 sind zueinander koaxial. Zur Kopplung jeweils einer ersten mit einer zweiten Spindel 61;62 ist vorzugsweise jeweils eine Gelenkwelle 70 vorhanden. Die Gelenkwelle 70 gleicht Winkelversätze und axiale Versätze der Spindeln 61;62 aus und ist torsionssteif. Andere mechanische Kupplungselemente zwischen den beiden Spindeln 61;62 sind möglich, die Gelenkwelle 70 ist allerdings bevorzugt.

Zur Lagerung der Spindeln 61;62 im Bereich der zweiten Spindelenden 61b;62b sind weitere Lagergehäuse 71 vorhanden, welche fest mit dem Balkengrundrahmen 30, insbesondere der Rahmenbodenwandung 30a, verbunden sind.

Die beiden zweiten Spindeln 62 stehen also über jeweils eine erste Spindel 61 mit dem Antriebsmotor 48 in die gleiche Drehrichtung wie die erste Spindel 61 drehbar antreibbar in Verbindung. Die beiden zweiten Spindeln 62 weisen allerdings ein Außengewinde auf, welches gegenläufig zum Außengewinde der ersten Spindeln 61 ist. Dadurch steht der zweite Hubwagen 60 über die zweiten Spindeln 61 mit dem Antriebsmotor 48 parallel zur Balkenlängsrichtung 20a linear hin- und her antreibbar in Verbindung, allerdings in gegenläufig zum ersten Hubwagen 50. Das heißt, die beiden Hubwagen 50;60 werden simultan bzw. synchron aufeinander zu bzw. voneinander weg verfahren.

Wie bereits erläutert, dienen die Hubwagen 50;60 zum Anheben und Absenken des Hubbalkens 31. Der Hubbalken 31 liegt dazu mit seinen beiden Hubbalkenantriebsflächen 38 jeweils auf einer der beiden Hubrollen 53 auf. Dabei liegen die Leisteninnenflächen 59a der Führungsleisten 59 an den Hubbalkenseitenflächen 34c an. Dadurch ist der Hubbalken 31 in Bezug zum jeweiligen Hubwagen 50;60 in Balkenquerrichtung 20b zentriert bzw. fixiert. In ihrer Ausgangsstellung sind die beiden Hubwagen 50;60 soweit auseinander gefahren, dass die Hubrollen 53 im Bereich jeweils eines der beiden Hubbalkenenden 33a;b an der jeweiligen Hubbalkenantriebsfläche 38 anliegen. Dadurch befindet sich der Hubbalken 31 in seiner tiefsten bzw. eingefahrenen Stellung.

Zudem liegen, wie oben ebenfalls bereits erläutert, die ebenen Blockführungsflächen der gehäusefesten Führungsblöcke 46 an den Hubbalkenseitenflächen 34c gleitbar an. Dadurch ist der Hubbalken 31 in Bezug zum Balkengrundrahmen 30 in Balkenquerrichtung 20b zentriert bzw. fixiert.

Des Weiteren ist jeweils einer der beiden Führungsklötze 37 zwischen den beiden Führungsrollen 45 eines Führungsrollenpaares angeordnet. Dabei liegen die Führungsrollen 45 an den Klotzführungsflächen 37a der Führungsklötze 37 an, so dass der Hubbalken 31 in Bezug zum Balkengrundrahmen 30 in Balkenlängsrichtung 20a zentriert bzw. fixiert ist. Der Hubbalken 31 steht also in Balkenhöhenrichtung 20c verschieblich aber in Balkenlängsrichtung 20a und in Balkenquerrichtung 20b jeweils unverschieblich mit dem Balkengrundrahmen 30 in Verbindung.

Die Shuttlebalken 20 sind, wie bereits erläutert, in Balkenlängsrichtung 20a bzw. in Waggonquerrichtung 3b hin- und her verfahrbar auf jeweils einer Förderbahn 22 gelagert. Dazu liegt jeweils die Rahmenbodenwandung 30a auf den Transportrollen 27 auf. Die Shuttlebalken 20 sind somit rollengeführt bzw. rollgelagert. Die Förderbahnen 22 sind, wie ebenfalls bereits erläutert, unterflur in Querrillen 21 der Verladebahn 4 angeordnet. Die Querrillen 21 weisen einen an die Oberfläche mündenden, verengten Schlitz 73 auf. Dieser ist in seiner Breite so bemessen, dass lediglich der Hubbalken 31 den verengten Schlitz 73 durchgreifen kann. Der verengte Schlitz ist somit lediglich geringfügig breiter als der Hubbalken 31. Der übrige Shuttlebalken 20 ist unterhalb des verengten Schlitzes 73 angeordnet und von oben nicht zu sehen.

Die Shuttlebalken 20 stehen zudem über die Antriebsketten 47 mit den antreibbaren Zahnrädern 29 in Balkenlängsrichtung 20a bzw. in Waggonquerrichtung 3b hin- und her antreibbar in Verbindung.

Im Folgenden wird nun das erfindungsgemäße Güterumschlagverfahren näher erläutert:
Solange sich kein Güterzug in der erfindungsgemäßen Güterumschlagvorrichtung 1 befindet, befinden sich die Schwenk- und Entriegelungsvorrichtungen 15 in ihrer nicht betätigten, wartenden Ausgangsstellung. In der Ausgangstellung sind die Schwenk- und Entriegelungseinrichtungen 15 von der Gleisanlage 2 weg gefahren. Das heißt, die Schwenk- und Entriegelungseinrichtungen 15 liegen nicht im Verfahrweg (Lichtraumprofil) der Güterwaggons 3. Zudem befinden sich sowohl der Schwenkhebel als auch die Betätigungshebel der Schwenk- und Entriegelungseinrichtungen 15 in ihrer nicht betätigten Ausgangstellung.

Die erfindungsgemäßen Shuttlebalken 20 befinden sich auf einer der Verladebahnen 4a-d.

Nun fährt ein Güterzug mit mehreren Güterwaggons 3 in die Güterumschlagvorrichtung 1 ein. Jeder Güterwaggon 3 enthält einen auf das Waggonuntergestell 5 aufgesetzten Waggonaufsatz 6. Die Einhängeleisten 18 des Waggonaufsatzes 6 liegen dabei auf den Wandoberkanten der beiden Waggonseitenwände 11 auf.

Der Güterzug überfährt beim Einfahren die gleisbettgebundenen Hubeinrichtungen. Sobald nun der Güterzug mit den Güterwaggons 3 in der erfindungsgemäßen Güterumschlagvorrichtung 1 angehalten hat, werden die Waggonaufsätze 6 mittels der ortsfesten Hubeinrichtungen von den Waggonuntergestellen 5 abgehoben. Dabei werden die zweiten Verriegelungseinrichtungen, falls vorhanden, durch das Abheben automatisch entriegelt. Zudem werden gegebenenfalls die Königszapfen automatisch entriegelt.

Vorzugsweise gleichzeitig bzw. kurz danach werden die Schwenk- und Entriegelungseinrichtungen 15 in Waggonquerrichtung 3b zu den wartenden Güterwaggons 3 hin gefahren. Nun werden die Schwenk- und Entriegelungseinrichtungen 15 derart betätigt, dass die Betätigungshebel die Verriegelungsbolzen in ihre nicht verriegelnde Stellung antreiben. Die Waggonseitenwände 11 werden somit entriegelt. Gleichzeitig schwenken die Schwenkhebel soweit nach oben, bis sie an der Waggonseitenwand 11 außenseitig anliegen. Dadurch wird verhindert, dass die Waggonseitenwände 11 unkontrolliert nach außen weg klappen. Nun werden die Schwenkhebel nach unten verschwenkt und die darauf vorzugsweise allein aufgrund der Schwerkraft aufliegenden Waggonseitenwände 11 nach außen weg geklappt.

Wenn die Waggonseitenwände 11 vollständig ausgeklappt sind, befinden sie sich in den oben beschriebenen Lücken 23 der Förderbahnen 22. Infolgedessen können die Waggonseitenwände 11 nun von den erfindungsgemäßen Shuttlebalken 20 überfahren werden. Diese werden nun aktiviert und fahren, angetrieben über die Zahnräder 29, in Waggonquerrichtung 3b bzw. Balkenlängsrichtung 20a über die weggeklappten Waggonseitenwände 11 hinweg unter die Waggonaufsätze 6.

Vorzugsweise befinden sich die Hubbalken 31 dabei bereits in ihrer ausgefahrenen Stellung oder werden währenddessen ausgefahren. Alternativ dazu werden die Hubbalken 31 erst ausgefahren, wenn die Hubbalken 31 unterhalb des Waggonaufsatzes 6 angekommen sind.

Zum Ausfahren der Hubbalken 31 wird der jeweilige Antriebsmotor 48 aktiviert, so dass die Spindeln 61;62 angetrieben werden. Die Spindeln 61;62 werden derart um ihre Spindelachsen gedreht, dass die Hubwagen 50;60 synchron aufeinander zu gefahren werden. Dabei rollen die beiden Hubrollen 53 an der jeweiligen schrägen Hubbalkenantriebfläche 38 entlang, von dem jeweiligen Hubbalkenende 33a;33b weg wodurch der Hubbalken 31 angehoben wird. Die Hubrollen 53 bilden somit mit der jeweiligen schrägen Hubbalkenantriebfläche 38 eine Keileinrichtung 74. Das heißt, die Hubbalkenantriebseinrichtung ist als Keilhubeinrichtung ausgebildet. Unter einer Keilhubeinrichtung ist eine Hubeinrichtung zu verstehen, die nach dem Keilprinzip arbeitet, um Antriebskräfte bzw. -momente und dadurch Belastungen des Antriebsgetriebes zu reduzieren. Das heißt die von einer Keilhubeinrichtung aufgebrachten Hubkräfte werden im Vergleich zu einer Hubeinrichtung ohne Keilprinzip bei gleichem Antriebsmoment vergrößert, nämlich um den Keilfaktor verstärkt.

Dann werden die Waggonaufsätze 6 mittels der ortsfesten Hubeinrichtungen auf den ausgefahrenen Hubbalken 31 abgesetzt. Dabei werden die Zentrierzapfen 35 in jeweilige Gegenzentriermittel der Waggonaufsätze 6 eingeführt.

Die mit den Waggonaufsätzen 6 beladenen Shuttlebalken 20 werden in Waggonquerrichtung 3b bzw. Balkenlängsrichtung 20a über die weggeklappten Waggonseitenwände 11 hinweg von dem Waggonuntergestell 5 weg und zu einer der Verladebahnen 4a-d hin gefahren. Dort werden die Waggonaufsätze 6 durch Absenken der Hubbalken 31 abgesenkt und auf der Verladebahn 4a-d abgesetzt. Die Hubbalken 31 werden dabei soweit abgesenkt, dass sie unterhalb der Oberfläche der Verladebahn 4a-d angeordnet sind. Das Absenken der Hubbalken 31 erfolgt dadurch, dass die beiden Hubwagen 50;60 synchron voneinander weg verfahren werden.

Die Spindeln 61;62 dazu im Vergleich zum Anheben in entgegengesetzte Drehrichtungen gedreht. Dabei rollen die beiden Hubrollen 53 an der jeweiligen schrägen Hubbalkenantriebfläche 38 entlang auf das jeweilige Balkenende 33a;33b zu, wodurch der Hubbalken 31 abgesenkt wird.

Nun werden die Waggonaufsätze 6 in an sich bekannter Weise entladen und mit neuen Gütern beladen. Die Sattelschlepperauflieger 7 werden z.B. durch Ankoppeln eines passenden Zugfahrzeuges (nicht dargestellt) von den Waggonaufsätzen 6 herunter bzw. auf diese drauf gefahren.

Nachdem die Waggonaufsätze 6 wieder mit neuen Gütern beladen worden sind, werden die Waggonaufsätze 6 mittels der Hubbalken 31 von der Verladebahn 4a-d angehoben und von den Shuttlebalken 20 zu den wartenden Waggonuntergestellen 5 verfahren und von den gleisbettfesten Hubeinrichtungen von den Shuttlebalken 20 abgehoben. Danach fahren die Shuttlebalken wieder zurück in ihre Ausgangsposition weg von den Gleissträngen 2a;2b zu einer der Verladebahnen 4a-d.

Die Waggonseitenwände 11 werden mittels der Schwenk- und Entriegelungseinrichtungen 15 wieder eingeklappt und mit den Waggonkopfstücken 10 verriegelt. Dann werden die Waggonaufsätze 6 mittels der ortsfesten Hubeinrichtungen auf den Waggonseitenwänden 11 abgesetzt und in diese eingehängt. Dabei werden gegebenenfalls die Königszapfen in die Königszapfenverriegelungseinrichtungen eingeführt und verriegelt. Nun kann der Güterzug die Güterumschlagvorrichtung 1 wieder verlassen.

Dadurch, dass die erfindungsgemäßen Shuttlebalken 20 den aktiven Hubbalken 31 aufweisen und auf jeder Seite der Gleisanlage 2 mehrere nebeneinander angeordnete Verladebahnen 4a-d vorhanden sind, kann das Güterumschlagverfahren auf verschiedene Arten variiert werden. Beispielsweise können die Shuttlebalken 20 nach dem Abladen der Waggonaufsätze 6 auf der einen Verladebahn 4a;b auf der einen Seite der Gleisanlage 2 zu einer der Verladebahnen 4c;d auf der anderen Seite der Gleisanlage 2 gefahren werden, auf der ein bereits beladener Waggonaufsatz 6 bereit steht, diesen anheben und zum leeren Waggonuntergestell 5 verfahren.

Zudem ist es auch möglich, den jeweiligen Güterzug etappenweise zu entladen und dadurch die Güterumschlagvorrichtung 1 in ihrer Länge zu verkürzen:
Beispielsweise ist die die Güterumschlagvorrichtung 1 lediglich so lang, dass nur ein halber Güterzug entladen werden kann. Die andere, hintere Hälfte des Güterzuges befindet sich außerhalb der Verladebahnen 4a-d. Dann wird zunächst die erste Hälfte des Güterzuges ent- und beladen. Die abgeladenen Waggonaufsätze 6 werden dabei auf der äußeren Verladebahn 4b auf der ersten Seite der Gleisanlage 2 abgesetzt. Auf der zweiten Seite der Gleisanlage 2 stehen, wie oben beschrieben, bereits beladene Waggonaufsätze 6 auf beiden Verladebahnen 4c;d bereit. Die auf der inneren Verladebahn 4c der zweiten Seite angeordneten beladenen Waggonaufsätze 6 werden dann zu den Waggonuntergestellen 5 gefahren und auf diesen abgesetzt.

Nun wird der Güterzug nach vorne verfahren, bis die zweite Hälfte des Güterzuges im Bereich der Verladebahnen 4a-d bzw. zwischen diesen angeordnet ist. Die Waggonaufsätze 6 werden von den Waggonuntergestellen 5 entladen. Dabei werden sie auf der weiter innen liegenden Verladebahn 4a auf der ersten Seite der Gleisanlage 2 abgesetzt. Anschließend werden die auf der weiter außen angeordneten Verladebahn 4d von der zweiten Seite der Gleisanlage 2 angeordneten beladenen Waggonaufsätze 6 zu den Waggonuntergestellen 5 gefahren und auf diesen abgesetzt.

Während die zweite Zughälfte be- und entladen wird, kann dabei bereits die vorgeschriebene Waggonkontrolle der ersten Zughälfte durch den Wagenmeister erfolgen (WTU = Wagentechnische Untersuchung). Aufgrund dessen ist der Zeitverlust durch den zweifachen Be- und Entladevorgang nicht allzu hoch. Und die Güterumschlagvorrichtung ist deutlich platzsparender und kostengünstiger, da nur eine geringere Anzahl von Shuttlebalken 20, Schwenk- und Entriegelungseinrichtungen 15, ortsfesten Hubeinrichtungen etc. vorhanden sein muss.

Selbstverständlich kann das Be- und Entladen auch in mehr als zwei Etappen erfolgen, je nach Länge des Güterzuges und der Güterumschlagvorrichtung 1.

Der erfindungsgemäße Shuttlebalken 20 ermöglicht aufgrund des integrierten Hubbalkens 31 das Prinzip mit mehreren nebeneinander angeordneten Verladebahnen 4. Zwei Verladebahnen bzw. -spuren 4 ermöglichen z.B. das Vorspeichern eines ganzen Zuges trotz halb so langem Güterumschlagterminal 1. Normale Industriegleise sind 100-400m lang aber keine 800m. Normale Zuglängen sind in der Regel 720m - ist ein Güterumschlagterminal 1 360m lang, kann es an vielen Orten, insbesondere in Deutschland und Europa, realisiert werden.

Mit dem erfindungsgemäßen Shuttlebalken 20 werden auch kurze Hubwege ermöglicht. Insbesondere müssen die Waggonaufsätze nur um 100 mm angehoben werden.

Das beschriebene Keilprinzip ermöglicht eine geringe Aufbauhöhe des Shuttlebalkens 20. Aufgrund dessen ist das gesamte Güterumschlagterminal 1 in flacher Bauweise ohne Tiefbau realisierbar. Die Höhe der Verladebahnen 4 ist ebenfalls sehr gering. Diese liegen nur 35cm über Schienenoberkante (SOK). Dadurch sind auch die Baukosten des erfindungsgemäßen Güterumschlagterminals sehr gering.

Der erfindungsgemäße Shuttlebalken 20 kann zudem als frei fahrendes Element einfach getauscht werden, z.B. bei einer Wartung oder einer Störung, da er kein festes Element ist.

Das Keilprinzip des aktiven Shuttlebalkens 20 minimiert zudem die Belastung des Antriebsstranges im Shuttlebalken 20. Denn die zum Anheben und Absenken aufzubringenden und zu übertragenden Kräfte/Momente sind deutlich geringer als die tatsächliche Hubkraft. Diese wirkt aber erst direkt auf den Hubbalken 31. Dadurch dass an jedem Hubbalkenende 33a;33b eine Keilhubeinrichtung vorhanden ist und die Hubbalkenantriebsflächen 38 gegenläufig zueinander sind und die Hubwagen 50;60 gegenläufig zueinander verfahren, heben sich zudem die Kräfte in Balkenlängsrichtung 20a gegenseitig auf. Eine zusätzliche Abstützung des Hubbalkens 31 in Balkenlängsrichtung 20a ist deshalb nicht erforderlich.

Die Keileinrichtungen 74 sind also gemäß einem vorteilhaften Aspekt der Erfindung derart ausgebildet, dass sich beim Absenken und Anheben die von den Hubwagen 50;60 auf den Hubbalken 31 in Balkenlängsrichtung 20a übertragenen bzw. wirkenden Kräfte gegenseitig aufheben. Zudem sind die Keileinrichtungen 74 vorzugsweise derart ausgebildet, dass beim Absenken und Anheben die von den Hubwagen 50;60 auf den Hubbalken 31 in Balkenhöhenrichtung 20c übertragenen bzw. wirkenden Hubkräfte gleich groß sind.

Auch ist der Hubbalken 31 im Vergleich zu anderen Hubelementen wie z.B. Hubzylindern sehr platzsparend, insbesondere schmal. Die Schlitze 73 können deshalb ebenfalls sehr schmal sein. Vorzugsweise weist der Hubbalken 31 eine Breite von 15 bis 40 cm, bevorzugt 20 bis 30 cm auf. Gleichzeitig weist er eine hohe Stabilität auf.

Vorteilhaft ist zudem, dass die Güterumschlagvorrichtung 1 keine ortsfesten Hubeinrichtungen aufweist, welche auf den Verladebahnen 4a-d angeordnet sind.

Vorteil der Wippe 63 ist, dass die auftretenden Zug- und Druckkräfte problemlos von den Spindeln 61;62 auf die Hubwagen 50;60 übertragen werden. Dies auch, wenn sich die Rahmenbodenwandung 30a des Balkengrundrahmens 30 aufgrund hoher Gewichtskräfte im Bereich der Hubwagen 50;60 durchbiegen sollte. Denn diese Höhenänderungen relativ zum Spindelgetriebe 49 werden durch das Verschwenken der Wippe 63 um die zur Balkenquerrichtung 20b parallele Drehachse ausgeglichen. Dadurch, dass die Wippe 63 auch um die zur Balkenhöhenrichtung 20c parallele Drehachse relativ zum Wagengehäuse 51 verschwenkbar ist, tritt keine Biegebelastung der Spindeln 61;62 auf, sondern lediglich die Umwandlung von Torsionsmoment auf Axialkraft zur Bewegung der Hubwagen 50;60 mit den Hubrollen 53 unter der Hubbalkenantriebsfläche 38. Die Spindeln 61;62 sind nicht zur Aufnahme von Biegemomenten ausgelegt sondern sollen im Idealfall nur Drehmoment in Axialkraft wandeln.

Vorteilhaft ist auch die Konstruktion des Balkengrundrahmens 30 mit den beiden U-Profilleisten 41, da dadurch hohe Biegemomente aufgenommen werden können. Der Balkengrundrahmen 30 kann aber auch anders aufgebaut sein, z.B. lediglich eine Bodenwandung aufweisen.

Im Rahmen der Erfindung liegt es dabei auch, dass der Waggonaufsatz 6 nicht auf die Waggonseitenwände 11 aufgesetzt sein, sondern kann z.B. auch direkt auf die beiden Waggonkopfstücke 10 aufgesetzt sein.

Zudem kann eine Güterumschlagvorrichtung 1 auch lediglich einen Güterwaggon 3 und zwei Shuttlebalken 20 aufweisen oder lediglich zwei Shuttlebalken 20 und die Güterwaggons 3 werden wie oben beschrieben nacheinander entladen.

Bei dem Güterwaggon 3 kann es sich zudem auch um einen Flachwagen mit gedecktem bzw. geschlossenem Waggonaufsatz gemäß der deutschen Patentanmeldung DE 10 2014 013 778 handeln.

Zudem können die Shuttlebalken 20 auch auf den Förderbahnen 7 gleitgelagert sein, beispielsweise auf Tragschienen oder die Shuttlebalken 20 weisen selber balkenfeste Fahrrollen auf.

Auch ist es möglich, dass die starre Verbindung der Waggonkopfstücke 10 miteinander nicht oder nur teilweise über die Waggonseitenwände 11 erfolgt, auch wenn dies bevorzugt ist. Die starre Verbindung kann zum Beispiel auch durch einen Mittellängsträger erfolgen.

Außerdem können die Keileinrichtungen 74, über die der Hubbalken 31 anhebbar und absenkbar mit den beiden Hubwagen 50;60 in Verbindung steht, auch auf andere Weise realisiert werden. Z.B. können die beiden Hubwagen 50;60 entsprechende schräge, zueinander gegenläufige Antriebsflächen aufweisen, an denen hubbalkenfeste Rollen abrollen. Zudem können die Hubwagen 50;60 und der Hubbalken 31 auch aneinander gleiten. Auch können sich die Antriebsflächen des Hubbalkens 31 anstelle schräg nach unten schräg nach oben von den Balkenenden 33a;33b weg erstrecken. Die Hubwagen 50;60 werden dann zum Absenken des Hubbalkens 31 aufeinander zu und zum Anheben voneinander weg verfahren.

Außerdem können die ersten und zweiten Spindeln 61;62 auch jeweils einstückig ausgebildet sein oder anderweitig drehfest miteinander verbunden sein.

Des Weiteren müssen die Hubwagen 50;60 nicht auf dem Balkengrundrahmen 30 rollengelagert sein, auch wenn dies bevorzugt ist. Es kommt darauf an, dass die Hubwagen 50;60 auf dem Balkengrundrahmen 30 parallel zur Balkenlängsrichtung hin- und her verfahrbar gelagert sind. Beispielsweise können die Hubwagen 50;60 auch gleitgelagert sein.

## Patentansprüche

1. Shuttlebalken (20) für eine Güterumschlagvorrichtung (1) zum Umschlagen von Gütern von der Straße zur Schiene und umgekehrt mittels horizontaler Querverladung, zum Verfahren eines Waggonaufsatzes (6) eines Güterwaggons (3) zu einer Verladebahn (4) und umgekehrt, wobei der Shuttlebalken (20) einen Balkengrundrahmen (30) aufweist, **dadurch gekennzeichnet, dass** am Shuttlebalken (20) Hubmittel zum Anheben und Absenken des Waggonaufsatzes (8) von bzw. auf der Verladebahn (4) angeordnet sind und dass diese Hubmittel einen Hubbalken (31) sowie eine Hubbalkenantriebseinrichtung (32) zum Anheben und Absenken des Hubbalkens (31) relativ zum Balkengrundrahmen (30) aufweisen.

2. Shuttlebalken (20) nach Anspruch 1,
**dadurch gekennzeichnet, dass**
die Hubbalkenantriebseinrichtung (32) zwei Hubwagen (50;60) und zumindest einen Antriebsmotor (48) aufweist, mit dem die Hubwagen (50;60) parallel zur Balkenlängsrichtung (20a) synchron gegenläufig linear hin- und her antreibbar in Verbindung stehen,
wobei die Hubwagen (50;60) derart gekoppelt mit dem Hubbalken (31) in Verbindung stehen, dass der Hubbalken (31) durch das Verfahren der beiden Hubwagen (50;60) anhebbar und absenkbar ist.

3. Shuttlebalken (20) nach Anspruch 2,
**dadurch gekennzeichnet, dass**
die Hubwagen (50;60) jeweils mittels einer Keileinrichtung (74) derart mit dem Hubbalken (31) in Verbindung stehen, dass der Hubbalken (31) durch das Verfahren der beiden Hubwagen (50;60) anhebbar und absenkbar ist, wobei vorzugsweise die Keileinrichtungen (74) derart ausgebildet sind, dass sich beim Absenken und Anheben die von den Hubwagen (50;60) auf den Hubbalken (31) in Balkenlängsrichtung (20a) übertragenen bzw. wirkenden Kräfte gegenseitig aufheben.

4. Shuttlebalken (20) nach Anspruch 3,
**dadurch gekennzeichnet, dass**
der Hubbalken (31) zwei sich in eine Balkenlängsrichtung (20a) gegenüberliegende Balkenenden (33a;33b) sowie eine Hubbalkenunterseite (34b) aufweist, wobei die Hubbalkenunterseite (34b) zwei jeweils, bevorzugt ebenflächige, Hubbalkenantriebsflächen (38) aufweist, welche sich jeweils von einem der beiden Balkenenden (33a;33b) in Balkenlängsrichtung (20a) gesehen schräg nach unten oder oben weg erstrecken,
wobei die Hubwagen (50;60) jeweils derart mit einer der beiden Hubbalkenantriebsflächen (38) in Eingriff stehen, dass der Hubbalken (31) durch das Verfahren der beiden Hubwagen (50;60) anhebbar und absenkbar ist.

5. Shuttlebalken (20) nach Anspruch 4,
**dadurch gekennzeichnet, dass**
die Hubbalkenantriebsflächen (38) mit der Balkenlängsrichtung (20a) jeweils einen spitzen Keilwinkel (α) einschließen, der vorzugsweise10 bis 30 ° beträgt.

6. Shuttlebalken (20) nach einem der vorhergehenden Ansprüche,
**dadurch gekennzeichnet, dass**
der Hubbalken (31) eine Hubbalkenoberseite (34a), die dazu vertikal gegenüberliegende Hubbalkenunterseite (34b), zwei sich in eine Balkenquerrichtung (20b) gegenüberliegende Hubbalkenseitenflächen (34c), sowie vorzugsweise zwei sich in Balkenlängsrichtung (20a) gegenüberliegende, vorzugsweise vertikale, Hubbalkenstirnflächen (34d) aufweist.

7. Shuttlebalken (20) nach Anspruch 6,
**dadurch gekennzeichnet, dass**
der Hubbalken (31) zwei von der Hubbalkenoberseite (34a) nach oben abstehende Zentrierzapfen (35) zum Zusammenwirken mit korrespondierenden Gegenzentriermitteln des Waggonaufsatzes (6) zur Zentrierung des Waggonaufsatzes (6) auf dem Shuttlebalken (20) aufweist, wobei die Zentrierzapfen (35) vorzugsweise jeweils im Bereich eines der beiden Hubbalkenenden (33a;b) angeordnet sind.

8. Shuttlebalken (20) einem der Ansprüche 4 bis 7,
**dadurch gekennzeichnet, dass**
der Hubbalken (31) zwei Bleche (39) aus gehärtetem Metall, vorzugsweise aus gehärtetem Stahl aufweist, wobei Blechoberflächen (39a) der Bleche (39) die Hubbalkenantriebsflächen (38) bilden.

9. Shuttlebalken (20) nach einem der Ansprüche 4 bis 8,
**dadurch gekennzeichnet, dass**
die beiden Hubwagen (50;60) jeweils ein Wagengehäuse (51) und eine von einer Rahmenbodenwandung (30a) beabstandete Hubrolle (53) aufweisen, wobei die Hubrolle (53) um eine zur Balkenquerrichtung (20b) parallele Drehachse mit dem Wagengehäuse (51) verbunden ist, und jeweils an einer der beiden Hubbalkenantriebsflächen (38) abrollbar anliegt.

10. Shuttlebalken (20) nach Anspruch 9,
**dadurch gekennzeichnet, dass**
die beiden Hubwagen (50;60) jeweils vier paarweise angeordnete Fahrrollen (52) aufweisen, mittels denen der Hubwagen (50;60) auf dem Balkengrundrahmen (30), insbesondere der Rahmenbodenwandung (30a), parallel zur Balkenlängsrichtung (20a) hin- und her verfahrbar rollengelagert ist, wobei vorzugsweise die Hubrolle (53) zwischen zwei Fahrrollenpaaren angeordnet ist.

11. Shuttlebalken (20) nach einem der Ansprüche 2 bis 10,
**dadurch gekennzeichnet, dass**
die Hubbalkenantriebseinrichtung (32) ein Spindelgetriebe (49) aufweist, über das die beiden Hubwagen (50;60) mit dem Antriebmotor (48) gegenläufig und synchron antreibbar in Verbindung stehen.

12. Shuttlebalken (20) nach Anspruch 11,
**dadurch gekennzeichnet, dass**
die Hubwagen (50;60) jeweils zumindest ein, vorzugsweise zwei, Mutterngehäuse (54) mit Innengewinde aufweisen, und
das Spindelgetriebe (49) Spindeln (61;62) aufweist, welche jeweils mit dem Innengewinde eines der Mutterngehäuse (54) derart in Eingriff stehen, dass die Hubwagen (50;60) durch Drehung der Spindeln (61;62) um deren Spindelachse parallel zur Balkenlängsrichtung (20a) verfahren werden.

13. Shuttlebalken (20) nach Anspruch 12,
**dadurch gekennzeichnet, dass**
die Mutterngehäuse (54) mit dem Wagengehäuse (51) um eine zur Balkenquerrichtung (20b) parallele Drehachse und vorzugsweise um eine zu einer Balkenhöhenrichtung (20b) parallele Drehachse schwenkbar in Verbindung stehen, wobei vorzugsweise die beiden Mutterngehäuse (54) eines Hubwagens (50;60) fest miteinander verbunden sind.

14. Shuttlebalken (20) nach Anspruch 12 oder 13,
**dadurch gekennzeichnet, dass**
das Spindelgetriebe (49) zwei erste Spindeln (61) zum Antrieb des ersten Hubwagens (50) und zwei zweite Spindeln (62) zum Antrieb des zweiten Hubwagens (60) aufweist, wobei die ersten und zweiten Spindeln (61;62) jeweils in Balkenquerrichtung (20b) zueinander benachbart und beidseits des Hubbalkens (31) und beidseits des Wagengehäuses (51) des jeweiligen Hubwagens (50;60) angeordnet sind,
wobei die ersten Spindeln (61) mit dem Antriebsmotor (48) um ihre Spindelachse drehbar antreibbar in Verbindung stehen und jeweils durch eines der beiden Mutterngehäuse (54) des ersten Hubwagens (50) durchgeführt sind und mit dessen Innengewinde in Eingriff stehen,
wobei die zweiten Spindeln (62) jeweils durch eines der beiden Mutterngehäuse (54) des zweiten Hubwagens (60) durchgeführt sind und mit dessen Innengewinde in Eingriff stehen, wobei jeweils eine zweite Spindel (62) mit einer der ersten Spindeln (61) um die zueinander koaxialen Spindelachsen unverdrehbar in Verbindung steht,
wobei vorzugsweise die ersten und zweiten Spindeln (61;62) jeweils gegenläufige Außengewinde aufweisen.

15. Shuttlebalken (20) nach Anspruch 14,
**dadurch gekennzeichnet, dass**
jeweils eine erste Spindel (61) mit einer zweiten Spindel (62) über eine Gelenkwelle (70) verbunden ist.

16. Shuttlebalken (20) nach einem der vorhergehenden Ansprüche,
**dadurch gekennzeichnet, dass**
der Hubbalken (31) in Balkenlängsrichtung (20a) und Balkenquerrichtung (20b) unverschieblich und in Balkenhöhenrichtung (20c) verschieblich mit dem Balkengrundrahmen (30) in Verbindung steht.

17. Güterumschlagvorrichtung (1) zum Umschlagen von Gütern von der Straße zur Schiene und umgekehrt mittels horizontaler Querverladung mittels von jeweils einem Waggonuntergestell (5) eines Güterwaggons (3) abnehmbaren, Güter aufnehmenden Waggonaufsätzen (6), aufweisend:
a) eine Gleisanlage (2) mit zwei Gleissträngen (2a;2b),
b) zumindest eine neben der Gleisanlage (2) und parallel zu dieser angeordnete Verladebahn (4a-d),
c) Vorzugsweise ortsfeste Hubeinrichtungen zum Anheben und Absenken der Waggonaufsätze (8) von bzw. auf dem jeweiligen Waggonuntergestell (5),
d) Mehrere quer zu der Gleisanlage (2) verfahrbare Shuttlebalken (20) für den Quertransport der Waggonaufsätze (6) von den Güterwaggons (3) auf die Verladebahn (4a-d) und umgekehrt,
**dadurch gekennzeichnet, dass**
die Shuttlebalken (20) gemäß einem der vorhergehenden Ansprüche ausgebildet sind.

18. Güterumschlagvorrichtung (1) nach Anspruch 17,
**dadurch gekennzeichnet, dass**
beidseits neben der Gleisanlage (2) jeweils mehrere Verladebahnen (4a-d) angeordnet sind, welche in einer Richtung quer zu den Gleissträngen (2a;2b) nebeneinander angeordnet sind.

19. Güterumschlagvorrichtung (1) nach Anspruch 17 oder 18,
**dadurch gekennzeichnet, dass**
das Waggonuntergestell (5) einen Waggonrahmen (8) sowie zwei, insbesondere zweiachsige, in eine Waggonlängsrichtung (3a) voneinander beabstandete Drehgestelle (9) oder Einzelachsen zum Verfahren des Güterwaggons (3) auf der Gleisanlage (2) aufweist,
wobei der Waggonrahmen (8) zwei voneinander in Waggonlängsrichtung (3a) beabstandete Waggonkopfstücke (10) aufweist, die jeweils stirnseitig des Waggonuntergestells (5) angeordnet sind und auf einem der beiden Drehgestelle (9) oder einer der beiden Einzelachsen gelagert sind, und
wobei der Waggonrahmen (8) zwei abklappbare Waggonseitenwände (11) aufweist, welche mit den Waggonkopfstücken (10) um eine zur Waggonlängsrichtung (3a) parallele Seitenwandschwenkachse schwenkbar verbunden sind.

20. Güterumschlagvorrichtung (1) nach einem der Ansprüche 17 bis 19,
**dadurch gekennzeichnet, dass**
die Shuttlebalken (20) unterflur auf Förderbahnen (22) verfahrbar gelagert sind, welche in Querrillen (23) der Verladebahn(en) (4a-d) angeordnet sind, wobei die Hubbalken (31) in ihrer eingefahrenen Stellung unterhalb einer Oberfläche der Verladebahn(en) (4a-d) angeordnet sind, wobei die Querrillen (21) einen an die Oberfläche der Verladebahn (4a-d) mündenden, verengten Schlitz (73) aufweisen, der in seiner Breite so bemessen ist, dass lediglich der Hubbalken (31) den verengten Schlitz (73) in seiner ausgefahrenen Stellung durchgreifen kann, wobei der übrige Shuttlebalken (20) unterhalb des verengten Schlitzes (73) angeordnet ist.

21. Güterumschlagverfahren zum Umschlagen von Gütern von der Straße zur Schiene mit einer Güterumschlagvorrichtung nach einem der Ansprüche 17 bis 20, mit folgenden Verfahrensschritten:
**dadurch gekennzeichnet, dass**
zum Quertransport der Waggonaufsätze (6) von den Waggongestellen (5) zur Verladebahn (4a-d) und umgekehrt die Shuttlebalken (20) verwendet werden.

22. Güterumschlagverfahren nach Anspruch 21 mit folgenden Verfahrensschritten:
a) Abheben der Waggonaufsätze (6) von den Waggonuntergestellen,
b) Vorzugsweise Abklappen der Waggonseitenwände (11)
c) Verfahren der Shuttlebalken (20) unter die Waggonaufsätze (6),
d) Absetzen der Waggonaufsätze (6) auf den Shuttlebalken (20),
e) Transportieren der Waggonaufsätze (6) von den Waggongestellen (5) zur Verladebahn (4a-d) mittels der Shuttlebalken (20),
f) Ent- und Beladen der Waggonaufsätze (6),
g) Transportieren der beladenen Waggonaufsätze (6) von der Verladebahn (4a-d) zu den Waggongestellen (5) mittels der Shuttlebalken (20),
h) Abheben der Waggonaufsätze (6) von den Shuttlebalken (20),
i) Verfahren der Shuttlebalken (20) zur Verladebahn (4a-d),
j) Vorzugsweise Anklappen der Waggonseitenwände (11),
k) Absetzen der Waggonaufsätze (6) auf den Waggonuntergestellen (5).

23. Güterumschlagverfahren nach Anspruch 21 oder 22,
**dadurch gekennzeichnet, dass**
der Güterzug derart etappenweise ent- und beladen wird, dass zunächst eine erster Teil der Güterwaggons (3) des Güterzuges gleichzeitig ent- und beladen werden, der Güterzug anschließend weiter bewegt wird und danach ein weiterer Teil der Güterwaggons (3) des Güterzuges gleichzeitig ent- und beladen werden.

## Claims

1. Shuttle bar (20) for a freight-handling device (1) for transferring cargo from road to rail and vice versa via horizontal transverse loading, for moving a railcar pallet (6) of a freight car (3) to a loading platform (4) and vice versa, wherein the shuttle bar (20) includes a bar base frame (30),
**characterized in that**
at the shuttle bar (20) lifting means for raising and lowering the railcar pallet (8) from or onto the loading platform (4) are arranged and that these lifting means include a lifting bar (31) as well as a lifting bar drive device (32) for raising and lowering the lifting bar (31) relative to the bar base frame (30).

2. Shuttle bar (20) according to Claim 1,
**characterized in that**
the lifting bar drive device (32) includes two lifting cars (50;60) and at least one drive motor (48) to which the lifting cars (50;60) are connected such that they are linearly drivable back and forth parallel to the bar longitudinal direction (20a) synchronously and in opposite directions,
wherein the lifting cars (50;60) are coupled to the lifting bar (31) such that the lifting bar (31) can be raised and lowered by the moving of the two lifting cars (50;60).

3. Shuttle bar (20) according to Claim 2,
**characterized in that**
the lifting cars (50; 60) are each connected to the lifting bar (31) using a wedge device (74) such that the lifting bar (31) can be raised and lowered by the moving of the two lifting cars (50; 60), wherein preferably the wedge devices (74) are configured such that during lowering and raising, the forces transmitted or acting from the lifting cars (50;60) on the lifting bar (31) cancel each other in the bar longitudinal direction (20a).

4. Shuttle bar (20) according to Claim 3,
**characterized in that**
the lifting bar (31) includes two bar ends (33a;33b) opposing in a bar longitudinal direction (20a) as well as a lifting bar underside (34b), wherein the lifting bar underside (34b) includes two preferably planar lifting bar drive surfaces (38), which each extend away obliquely downward or upward from one of the two bar ends (33a;33b) seen in the bar longitudinal direction (20a),
wherein the lifting cars (50;60) are each in engagement with one of the two lifting bar drive surfaces (38) such that the lifting bar is able to be raised and lowered by the movement of the two lifting cars (50;60).

5. Shuttle bar (20) according to Claim 4,
**characterized in that**
the lifting bar drive surfaces (38) each enclose an acute wedge angle (α) with the bar longitudinal direction (20a) that is preferably 10 to 30°.

6. Shuttle bar (20) according to one of the preceding claims,
**characterized in that**
the lifting bar (31) includes a lifting bar topside (34a), the lifting bar underside (34b) vertically opposite thereto, two lifting bar side surfaces (34c) opposing in a bar transverse direction (20b), and preferably two, preferably vertical, lifting bar end surfaces (34d) opposing in the bar longitudinal direction (20a).

7. Shuttle bar according to Claim 6,
**characterized in that**
the lifting bar (31) includes two centering pins (35), protruding upward from the lifting bar topside (34a), for interacting with corresponding counter-centering means of the railcar pallet (6) for centering of the railcar pallet (6) on the shuttle bars (20), wherein the centering pins (35) are preferably each disposed in the region of one of the two lifting-bar ends (33a;b).

8. Shuttle bar (20) one of Claims 4 to 7,
**characterized in that**
the lifting bars (31) include two plates made from hardened metal, preferably from hardened steel, wherein plate surfaces (39a) of the plates (39) form the lifting bar drive surfaces (38).

9. Shuttle bar (20) according to one of Claims 4 to 8,
**characterized in that**
the two lifting cars (50;60) each include a car housing (51) and a lifting roller (53) spaced from a frame base wall (30a), wherein the lifting roller (53) is rotatably connected to the car housing (51) about an axis of rotation parallel to the bar transverse direction (20b), and respectively rolls against on one of the two lifting bar drive surfaces (38).

10. Shuttle bar (20) according to Claim 9,
**characterized in that**
the two lifting cars (50;60) each include four driving rollers (52) disposed pairwise, by which the lifting car (50;60) is rollable supported on the bar base frame (30), in particular the frame base wall (30a), such that it is drivable back and forth parallel to the bar longitudinal direction (20a), wherein the lifting roller (53) is preferably disposed between two driving roller pairs.

11. Shuttle bar (20) according to one of Claims 2 to 10,
**characterized in that**
he lifting-bar drive device (32) includes a spindle transmission (49), via which the the two lifting cars (50;60) are connected to the drive motor (48) such that they are drivable synchronously and in opposite directions.

12. Shuttle bar (20) according to Claim 11,
**characterized in that**
the lifting cars (50;60) each include at least one, preferably two, nut housings (54) with internal thread, and
the spindle transmission (49) includes spindles (61;62) that are each in engagement with the internal thread of one of the nut housings (54) such that the lifting cars (50;60) are moved parallel to the bar longitudinal direction (20a) by rotation of the spindles (61;62) about their spindle axes.

13. Shuttle bar (20) according to Claim 12,
**characterized in that**
the nut housings (54) are pivotable connected to the car housings (51) about an axis of rotation parallel to the bar transverse direction (20b) and preferably about an axis of rotation parallel to a bar height direction (20b), wherein preferably the two nut housings (54) of a lifting car (50;60) are fixedly connected to each other.

14. Shuttle bar (20) according to Claim 12 or 13,
**characterized in that**
the spindle transmission (49) includes two first spindles (61) for driving the first lifting car (50) and two second spindles (62) for driving the second lifting car (60), wherein the first and second spindles (61;62) are each disposed adjacent to each other in the bar transverse direction (20b) and on both sides of the lifting bar (31) and on both sides of the car housing (51) of the respective lifting car (50;60), wherein the first spindles (61) are connected to the drive motor (48) such that they are rotatably drivable about their spindle axes and wherein the first spindles (61) are each passed through one of the two nut housings (54) of the first lifting car (50) and are in engagement with its internal thread, wherein the second spindles (62) are each passed through one of the two nut housings (54) of the second lifting car (60) and are in engagement with its internal thread, wherein respectively a second spindle (62) is connected to one of the first spindles (61) about the mutually coaxial spindle axes such that they cannot rotate, wherein preferably the first and second spindles (61;62) each include opposing external threads.

15. Shuttle bar (20) according to Claim 14,
**characterized in that**
each first spindle (61) is connected to a second spindle (62) via a drive shaft (70).

16. Shuttle bar (20) according to one of the preceding claims,
**characterized in that**
the lifting bar (31) is connected to the bar base frame (30) such that it does not move in the bar longitudinal direction (20a) and in the bar transverse direction (20b) and such that it does move in the bar height direction (20c).

17. Freight-handling device (1) for transferring cargo from road to rail and vice versa via horizontal transverse loading using railcar pallets (6) removable from a railcar undercarriage (5) of a freight car (3) and receiving cargo, including:
a) a rail system (2) with two track lines (2a;2b),
b) at least one loading platform (4a-d) disposed adjacent to the track system (2) and parallel thereto,
c) preferably stationary lifting devices for raising and lowering the railcar pallets (8) from or onto the respective railcar undercarriage (5),
d) a plurality of shuttle bars (20) movable transverse to the track system (2) for the transverse transport of the railcar pallets (6) from the freight car (3) to the loading platform (4a-d) and vice versa,
**characterized in that**
the shuttle bars (20) are configured according to one of the preceding claims.

18. Freight-handling device (1) according to Claim 17,
**characterized in that**
a plurality of loading platforms (4a-d) are respectively disposed on both sides adjacent to the rail system (2), which loading platforms (4a-d) are disposed adjacent to one another in a direction transverse to the track lines (2a;2b).

19. Freight-handling device (1) according to Claim 17 or 18,
**characterized in that**
the railcar undercarriage (5) includes a railcar frame (8) and two in particular two-axle bogies (9) or individual axles, spaced from each other in a railcar longitudinal direction (3a), for moving the freight car (3) onto the rail system (2), wherein the railcar frame (8) includes two railcar headpieces (10) spaced from each other in the railcar longitudinal direction (3a), which railcar headpieces (10) are each disposed end-side on the railcar undercarriage (5) and are supported on one of the two bogies (9) or one of the two individual axles, and
wherein the railcar frame (8) includes two down-foldable railcar side walls (11) which are pivotable connected to the railcar headpieces (10) about a side-wall pivot axis parallel to the railcar longitudinal direction (3a).

20. Freight-handling device (1) according to one of Claims 17 to 19,
**characterized in that**
the shuttle bars (20) are movably supported underfloor on conveyor lanes (22), which are disposed in transverse grooves (23) of the loading platform(s) (4a-d), wherein the lifting bars (31) in their retracted position are disposed below a surface of the loading platform(s) (4a-d),
wherein the transverse grooves (21) include a narrowed slot (73) opening onto the surface of the loading platform (4a-d), which slot (73) is dimensioned in its width such that only the lifting bar (31) can engage through the narrowed slot (73) in its extended position, wherein the rest of the shuttle bar (20) is disposed below the narrowed slot (73).

21. Freight-handling method for transferring cargo from road to rail with a freight-handling device according to one of Claims 17 to 20:
**characterized in that**
the shuttle bars (20) are used for transverse transport of the railcar pallet (6) from the railcar frame (5) to the loading platform (4a-d) and vice versa.

22. Freight-handling method according to Claim 21 with the following method steps:
a) Lifting of the railcar pallets (6) from the railcar undercarriages,
b) Preferably folding down the railcar side walls (11)
c) Moving the shuttle bars (20) under the railcar pallets (6),
d) Setting the railcar pallets (6) onto the shuttle bars (20),
e) Transporting the railcar pallets (6) from the railcar carriages (5) to the loading platform (4a-d) using the shuttle bars (20),
f) Unloading and loading of the railcar pallets (6),
g) Transporting the loaded railcar pallets (6) from the loading platform (4a-d) to the railcar carriages (5) using the shuttle bars (20),
h) Lifting off the railcar pallets (6) from the shuttle bars (20),
i) Moving the railcar pallets (6) to the loading platform (4a-d),
j) Preferably folding up the railcar side walls (11),
k) Setting down the railcar pallets onto the railcar undercarriages (5).

23. Freight-handling method according to Claim 21 or 22,
**characterized in that**
the freight train is unloaded and loaded in a stepwise manner such that initially a first part of the freight cars (3) of the freight train are simultaneously unloaded and loaded, the freight train is subsequently moved farther, and thereafter a further part of the freight car (3) of the freight train is simultaneously unloaded and loaded.

## Revendications

1. Mâchoire de navette (20) pour un dispositif de transbordement de marchandises (1) pour le transbordement de marchandises de la route au rail et inversement au moyen d'un chargement transversal horizontal, pour le déplacement d'une pièce rapportée de wagon (6) d'un wagon de marchandises (3) vers une voie de chargement (4) et inversement, dans laquelle la mâchoire de navette (20) présente un cadre de base de mâchoire (30),
**caractérisée en ce que**
des moyens de levage sont agencés sur la mâchoire de navette (20) pour le levage et l'abaissement de la pièce rapportée de wagon (8) de ou sur la voie de chargement (4) et que ces moyens de levage présentent une mâchoire de levage (31) ainsi qu'un dispositif d'entraînement de mâchoire de levage (32) pour le levage et l'abaissement de la mâchoire de levage (31) par rapport au cadre de base de mâchoire (30).

2. Mâchoire de navette (20) selon la revendication 1,
**caractérisée en ce que**
le dispositif d'entraînement de mâchoire de navette (32) présente deux wagons de levage (50 ; 60) et au moins un moteur d'entraînement (48) avec lequel les wagons de levage (50 ; 60) sont en liaison de manière entraînable alternativement linéairement en sens inverse et en synchronisme parallèlement au sens longitudinal de mâchoire (20a),
dans laquelle les wagons de levage (50 ; 60) sont en liaison de manière couplée à la mâchoire de levage (31) de telle manière que la mâchoire de levage (31) puisse être levée et abaissée par le déplacement des deux wagons de levage (50 ; 60).

3. Mâchoire de navette (20) selon la revendication 2,
**caractérisée en ce que**
les wagons de levage (50 ; 60) sont en liaison respectivement au moyen d'un dispositif de coin (74) avec la mâchoire de levage (31) de telle manière que la mâchoire de levage (31) puisse être levée et abaissée par le déplacement des deux wagons de levage (50 ; 60), dans laquelle de préférence les dispositifs de coin (74) sont réalisés de telle manière que lors de l'abaissement et du levage, les forces agissant ou transmises par les wagons de levage (50 ; 60) à la mâchoire de levage (31) dans le sens longitudinal de mâchoire (20a) s'annulent mutuellement.

4. Mâchoire de navette (20) selon la revendication 3,
**caractérisée en ce que**
la mâchoire de levage (31) présente deux extrémités de mâchoire (33a ; 33b) opposées dans un sens longitudinal de mâchoire (20a) ainsi qu'un côté inférieur de mâchoire de levage (34b), dans laquelle le côté inférieur de mâchoire de levage (34b) présente deux surfaces d'entraînement de mâchoire de levage (38) respectivement de préférence planes qui s'étendent respectivement vu depuis une des deux extrémités de mâchoire (33a ; 33b) dans le sens longitudinal de mâchoire (20a) en biais vers le bas ou le haut,
dans laquelle les wagons de levage (50 ; 60) sont en prise respectivement avec une des deux surfaces d'entraînement de mâchoire de levage (38) de telle manière que la mâchoire de levage (31) puisse être levée et abaissée par le déplacement des deux wagons de levage (50 ; 60).

5. Mâchoire de navette (20) selon la revendication 4,
**caractérisée en ce que**
les surfaces d'entraînement de mâchoire de levage (38) forment avec le sens longitudinal de mâchoire (20a) respectivement un angle de coin (α) aigu qui s'élève de préférence selon une valeur comprise entre 10 et 30°.

6. Mâchoire de navette (20) selon l'une quelconque des revendications précédentes,
**caractérisée en ce que**
la mâchoire de levage (31) présente un côté supérieur de mâchoire de levage (34a), le côté inférieur de mâchoire de levage (34b) opposé verticalement à celui-ci, deux surfaces latérales de mâchoire de levage (34c) opposées dans un sens transversal de mâchoire (20b), ainsi que de préférence deux surfaces avant de mâchoire de levage (34d) opposées dans le sens longitudinal de mâchoire (20a), de préférence verticales.

7. Mâchoire de navette (20) selon la revendication 6,
**caractérisée en ce que**
la mâchoire de levage (31) présente deux tenons de centrage (35) dépassant vers le haut depuis le côté supérieur de mâchoires de levage (34a) pour la coopération avec des moyens de centrage antagonistes correspondants de la pièce rapportée de wagon (6) pour le centrage de la pièce rapportée de wagon (6) sur la mâchoire de navette (20), dans laquelle les tenons de centrage (35) sont de préférence agencés respectivement dans la zone d'une des deux extrémités de mâchoire de levage (33a ; b).

8. Mâchoire de navette (20) selon l'une quelconque des revendications 4 à 7,
**caractérisée en ce que**
la mâchoire de levage (31) présente deux tôles (39) en métal trempé, de préférence en acier trempé, dans laquelle des surfaces de tôle (39a) des tôles (39) forment les surfaces d'entraînement de mâchoire de levage (38).

9. Mâchoire de navette (20) selon l'une quelconque des revendications 4 à 8,
**caractérisée en ce que**
les deux wagons de levage (50 ; 60) présentent respectivement un boîtier de wagon (51) et un rouleau de levage (53) espacé par une paroi de fond de cadre (30a), dans laquelle le rouleau de levage (53) est raccordé autour d'un axe de rotation parallèle au sens transversal de mâchoire (20b) au boîtier de wagon (51) et repose de manière déroulable respectivement contre une des deux surfaces d'entraînement de mâchoire de levage (38).

10. Mâchoire de navette (20) selon la revendication 9,
**caractérisée en ce que**
les deux wagons de levage (50 ; 60) présentent respectivement quatre rouleaux de déplacement (52) agencés par paire au moyen desquels le wagon de levage (50 ; 60) est logé sur rouleau de manière déplaçable alternativement sur le cadre de base de mâchoire (30), en particulier la paroi de fond de cadre (30a) parallèlement au sens longitudinal de mâchoire (20a), dans laquelle le rouleau de levage (53) est de préférence agencé entre deux paires de rouleaux de déplacement.

11. Mâchoire de navette (20) selon l'une quelconque des revendications 2 à 10,
**caractérisée en ce que**
le dispositif d'entraînement de mâchoire de levage (32) présente un engrenage à broche (49) par le biais duquel les deux wagons de levage (50 ; 60) sont en liaison de manière entraînable en sens inverse et en synchronisme avec le moteur d'entraînement (48).

12. Mâchoire de navette (20) selon la revendication 11,
**caractérisée en ce que**
les wagons de levage (50 ; 60) présentent respectivement au moins un, de préférence deux boîtiers à écrous (54) avec filetage intérieur, et
l'engrenage à broche (49) présente des broches (61 ; 62) qui sont en prise respectivement avec le filetage intérieur d'un des boîtiers à écrous (54) de telle manière que les wagons de levage (50 ; 60) soient déplacés lors de la rotation des broches (61 ; 62) autour de leur axe de broche parallèlement au sens longitudinal de mâchoire (20a).

13. Mâchoire de navette (20) selon la revendication 12,
**caractérisée en ce que**
les boîtiers à écrous (54) sont en liaison de manière pivotante avec le boîtier de wagon (51) autour d'un axe de rotation parallèle au sens transversal de mâchoire (20b) et de préférence autour d'un axe de rotation parallèle à un sens vertical de mâchoire (20b), dans laquelle de préférence les deux boîtiers d'écrous (54) d'un wagon de levage (50 ; 60) sont raccordés fixement l'un à l'autre.

14. Mâchoire de navette (20) selon la revendication 12 ou 13,
**caractérisée en ce que**
l'engrenage à broche (49) présente deux premières broches (61) pour l'entraînement du premier wagon de levage (50) et deux secondes broches (62) pour l'entraînement du second wagon de levage (60), dans laquelle les première et seconde broches (61 ; 62) sont agencées respectivement dans le sens transversal de mâchoire (20b) de manière contiguë l'une à l'autre et de part et d'autre de la mâchoire de levage (31) et de part et d'autre du boîtier de wagon (51) du wagon de levage (50 ; 60) respectif,
dans laquelle les premières broches (61) sont en liaison de manière entraînable et rotative avec le moteur d'entraînement (48) autour de leur axe de broche et sont passées respectivement au travers d'un des deux boîtiers à écrous (54) du premier wagon de levage (50) et sont en prise avec son filetage intérieur,
dans laquelle les secondes broches (62) sont passées respectivement au travers d'un des deux boîtiers à écrous (54) du second wagon de levage (60) et sont en prise avec son filetage intérieur, dans laquelle respectivement une seconde broche (62) est en liaison avec une des premières broches (61) autour des axes de broche coaxiaux l'un par rapport à l'autre d'une manière qui ne permette pas de tourner,
dans laquelle les première et seconde broches (61 ; 62) présentent de préférence respectivement un filetage extérieur en sens inverse.

15. Mâchoire de navette (20) selon la revendication 14,
**caractérisée en ce que**
respectivement une première broche (61) est raccordée à une seconde broche (62) par le biais d'un arbre articulé (70).

16. Mâchoire de navette (20) selon l'une quelconque des revendications précédentes,
**caractérisée en ce que**
la mâchoire de levage (31) est en liaison de manière immobile dans le sens longitudinal de mâchoire (20a) et le sens transversal de mâchoire (20b) et de manière mobile dans le sens vertical de mâchoire (20c) avec le cadre de base de mâchoire (30).

17. Dispositif de transbordement de marchandises (1) pour le transbordement de marchandises de la route au rail et inversement au moyen d'un chargement transversal horizontal au moyen de pièces rapportées de wagon (6) recevant des marchandises, retirables respectivement d'un châssis de wagon (5) d'un wagon de marchandises (3), présentant :
a) une installation de voies ferrées (2) avec deux voies ferrées (2a ; 2b),
b) au moins une voie de chargement (4a-d) agencée à côté de l'installation de voies ferrées (2) et parallèle à celle-ci,
c) des dispositifs de levage fixes de préférence pour le levage et l'abaissement des pièces rapportées de wagon (8) de ou sur le châssis de wagon respectif (5),
d) plusieurs mâchoires de navette (20) déplaçables transversalement à l'installation de voies ferrées (2) pour le transport transversal des pièces rapportées de wagon (6) des wagons de marchandises (3) sur la voie de chargement (4a-d) et inversement,
**caractérisé en ce que**
les mâchoires de navette (20) sont réalisées selon l'une quelconque des revendications précédentes.

18. Dispositif de transbordement de marchandises (1) selon la revendication 17,
**caractérisé en ce que**
respectivement plusieurs voies de chargement (4a-d) sont agencées de part et d'autre à côté de l'installation de voies ferrées (2), lesquelles sont agencées les unes à côté des autres dans un sens transversal aux voies ferrées (2a ; 2b).

19. Dispositif de transbordement de marchandises (1) selon la revendication 17 ou 18,
**caractérisé en ce que**
le châssis de wagon (5) présente un cadre de wagon (8) ainsi que deux boggies (9) en particulier à deux essieux, espacés l'un de l'autre dans un sens longitudinal de wagon (3a) ou à essieux individuels pour le déplacement du wagon de marchandises (3) sur l'installation de voies ferrées (2),
dans lequel le cadre de wagon (8) présente deux pièces de tête de wagon (10) espacées l'une de l'autre dans le sens longitudinal de wagon (3a) qui sont agencées respectivement côté avant du châssis de wagon (5) et sont logées sur un des deux boggies (9) ou un des deux essieux individuels, et
dans lequel le cadre de wagon (8) présente deux parois latérales de wagon (11) rabattables qui sont raccordées de manière pivotante aux pièces de tête de wagon (10) autour d'un axe de pivotement de paroi latérale parallèle au sens longitudinal de wagon (3a).

20. Dispositif de transbordement de marchandises (1) selon l'une quelconque des revendications 17 à 19,
**caractérisé en ce que**
les mâchoires de navette (20) sont logées en sous-sol de manière déplaçable sur des voies de transport (22) qui sont agencées dans des rainures transversales (23) de la/des voie(s) de chargement (4a-d), dans lequel les mâchoires de levage (31) sont agencées dans leur position rentrée sous une surface de la/des voie(s) de chargement (4a-d), dans lequel les rainures transversales (21) présentent une fente (73) rétrécie, débouchant sur la surface de la voie de chargement (4a-d), qui est dimensionnée dans sa largeur de sorte que juste la mâchoire de levage (31) puisse recouvrir la fente rétrécie (73) dans sa position sortie, dans lequel la mâchoire de navette restante (20) est agencée sous la fente rétrécie (73).

21. Procédé de transbordement de marchandises pour le transbordement de marchandises de la route au rail avec un dispositif de transbordement de marchandises selon l'une quelconque des revendications 17 à 20, comprenant les étapes de procédé suivantes :
**caractérisées en ce que**
les mâchoires de navette (20) sont utilisées pour le transport transversal des pièces rapportées de wagon (6) des châssis de wagon (5) à la voie de chargement (4a-d) et inversement.

22. Procédé de transbordement de marchandises selon la revendication 21 comprenant les étapes de procédé suivantes :
a) le levage des pièces rapportées de wagon (6) des châssis de wagon,
b) le rabattement de préférence des parois latérales de wagon (11),
c) le déplacement des mâchoires de navette (20) sous les pièces rapportées de wagon (6),
d) le dépôt des pièces rapportées de wagon (6) sur les mâchoires de navette (20),
e) le transport des pièces rapportées de wagon (6) des châssis de wagon (5) vers la voie de chargement (4a-d) au moyen des mâchoires de navette (20),
f) le déchargement et le chargement des pièces rapportées de wagon (6),
g) le transport des pièces rapportées de wagon chargées (6) de la voie de chargement (4a-d) vers les châssis de wagon (5) au moyen des mâchoires de navette (20),
h) le levage des pièces rapportées de wagon (6) des mâchoires de navette (20),
i) le déplacement des mâchoires de navette (20) vers la voie de chargement (4a-d),
j) le rabattement de préférence des parois latérales de wagon (11),
k) le dépôt des pièces rapportées de wagon (6) sur les châssis de wagon (5).

23. Procédé de transbordement de marchandises selon la revendication 21 ou 22,
**caractérisé en ce que**
le train de marchandises est déchargé et chargé par étapes de telle manière que tout d'abord une première partie des wagons de marchandises (3) du train de marchandises soit déchargée et chargée simultanément, le train de marchandises soit encore déplacé ensuite et après une autre partie des wagons de marchandises (3) du train de marchandises soit déchargée et chargée simultanément.
